# EUROPEAN PATENT SPECIFICATION

(11) **EP 0 614 926 B1**
(45) Date of publication and mention of the grant of the patent: **10.12.1997**
(21) Application number: 94103508.1
(22) Date of filing: 08.03.1994
(51) Int. Cl.: C08G 64/12, C08G 64/04

(54) **Polycarbonate and process for producing the same**
Polycarbonat und Verfahren zu seinen Herstellung
Polycarbonate et procédé pour sa préparation

(30) Priority: 08.03.1993 JP 46748/93
(43) Date of publication of application: 14.09.1994
(73) Proprietor: MITSUBISHI GAS CHEMICAL COMPANY, INC., Chiyoda-ku, Tokyo (JP)
(72) Inventor: Ogawa, Noriyoshi, c/o Mitsubishi Gas Chem. Co. Inc, Toyonaka-shi, Osaka (JP); Takata, Toshiaki, c/o Mitsubishi Gas Chem. Co. Inc, Toyonaka-shi, Osaka (JP); Kanayama, Satoshi, c/o Mitsubishi Gas Chem. Co.Inc, Hiratsuka-shi, Kanagawa (JP)
(74) Representative: Hansen, Bernd, Dr. Dipl.-Chem.

(56) References cited:
- DE-A- 3 903 487

## Description

### FIELD OF THE INVENTION

The present invention relates to a polycarbonate having a repeating unit derived from a trihydric phenol compound having a benzotriazole structure, in the molecule and a process for producing the polycarbonate. More specifically, the present invention relates to a polycarbonate comprising a repeating unit derived from a trihydric phenol compound having a benzotriazole structure and a repeating unit derived from a dihydric phenol compound, wherein the content of the repeating unit derived from the trihydric phenol compound having the benzotriazole structure is from 0.1 to 90 mol% based on the mole of the total repeating units, and also to a process for producing the polycarbonate.

The polycarbonate is obtained by reacting a trihydric phenol compound having a benzotriazole structure represented by the formula shown hereinafter and a dihydric phenol compound represented by the formula shown hereinafter with a carbonate precursor.

The polycarbonate of the present invention is useful as a molding material and also as a material for forming a polymer alloy with other resin, and in particular, is a material useful in the field of requiring a weather resistance.

### BACKGROUND OF THE INVENTION

The greater part of polycarbonates industrially produced at present are a so-called bisphenol A-type polycarbonates produced using bisphenol A [2,2-bis(4-hydroxyphenyl)propane] as the raw material.

A bisphenol A-type polycarbonate is a resin well-balanced in the points of the cost, the properties of the resin, the heat resistance, the mechanical resistance, etc., but recently with the increase of the uses of polycarbonates, polycarbonates having more excellent properties have been desired and polycarbonates having various structures have been developed as disclosed in, e.g., JP-A-63-108023 and JP-A-64-66236. The term "JP-A" as used herein means an "unexamined published Japanese patent application".

Furthermore, polycarbonates having far more excellent properties, polycarbonates having specific properties, or polycarbonates showing a specific performance in relation to the fields of uses have been desired in markets.

### SUMMARY OF THE INVENTION

As a result of various investigation, it has been found that a polycarbonate having a specific benzotriazole structure in the structural unit is useful as various molding materials and a raw material for forming a polymer alloy with other resin. The present invention has been accomplished based on this finding.

Accordingly, one object of the present invention is to provide a polycarbonate having a specific structure, and an excellent weather resistance and being useful as a molding material and as a material for forming a polymer alloy with other resin.

Another object of the present invention is to provide a polycarbonate comprising a repeating unit derived from a trihydric phenol compound having a benzotriazole structure and a repeating unit derived from a dihydric phenol compound.

A still another object of the present invention is to provide a process for producing the polycarbonate.

The polycarbonate of the present invention can be obtained by reacting a specific trihydric phenol compound having a benzotriazole structure and a dihydric phenol compound with a carbonate precursor.

According to one embodiment of the present invention, there is provided a polycarbonate comprising a repeating unit represented by the following formula (A) having the specific benzotriazole structure and a repeating unit represented by the following formula (B), wherein the content of the repeating unit represented by the formula (A) is from 0.1 to 90 mol% based on the mole of the total repeating units. 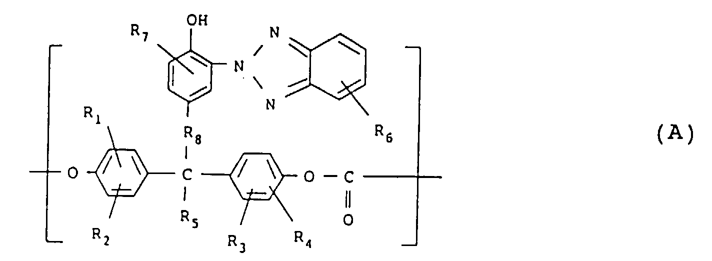 wherein R₁ to R₆ each represents a hydrogen atom, a halogen atom, a C₁₋₅ alkyl group which may have a substituent, a C₆₋₁₂ aryl group which may have a substituent, a C₇₋₁₇ aralkyl group which may have a substituent, a C₂₋₅ alkenyl group which may have a substituent, or a C₁₋₅ alkoxy group which may have a substituent, R₇ represents a hydrogen atom, a C₁₋₁₀ alkyl group which may have a substituent, a C₆₋₁₈ aryl group which may have a substituent, a C₇₋₂₈ aralkyl group which may have a substituent, a C₁₋₁₀ alkenyl group which may have a substituent, or a C₁₋₁₀ alkoxy group which may have a substituent and R₈ represents - (CH₂)ₐ- (wherein a represents an integer of 0 or at least 1); 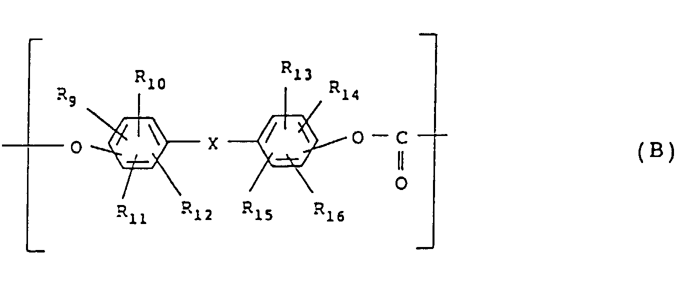 wherein R₉ to R₁₆ each represents a hydrogen atom, a halogen atom, a C₁₋₅ alkyl group which may have a substituent, a C₆₋₁₂ aryl group which may have a substituent, a C₇₋₁₇ aralkyl group which may have a substituent, a C₂₋₅ alkenyl group which may have a substituent, or a C₁₋₅ alkoxy group which may have a substituent; X represents 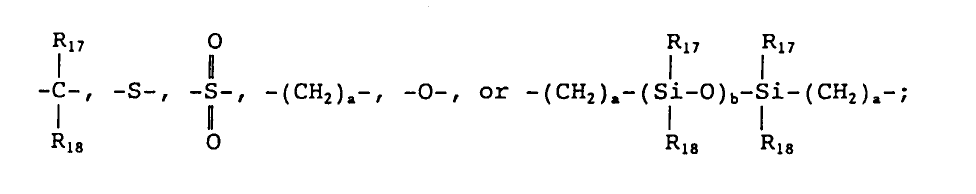 wherein R₁₇ and R₁₈ each represents a hydrogen atom, a halogen atom, a C₁₋₅ alkyl group which may have a substituent, or a C₆₋₁₂ aryl group which may have a substituent, or R₁₇ and R₁₈ represent groups which together form a carbocyclic ring or a heterocyclic ring; and a and b each represents an integer of at least 1.

According to another embodiment of the present invention, there is provided a process for producing a polycarbonate having the repeating unit represented by the formula (A) described above and the repeating unit represented by the formula (B) described above, which comprises reacting a trihydric phenol compound represented by the following formula (C) having a benzotriazole structure and a dihydric phenol compound represented by the following formula (D) in the presence of a catalyst and a solvent; 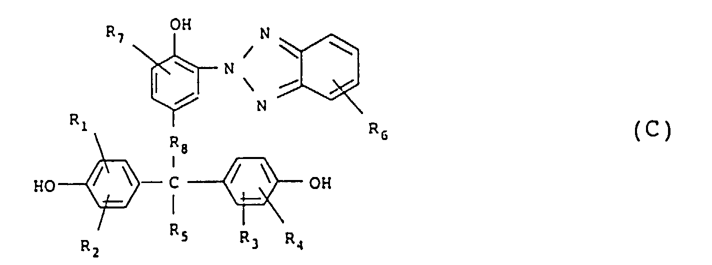 wherein R₁ to R₈ are the same as defined in the formula (A) described above; 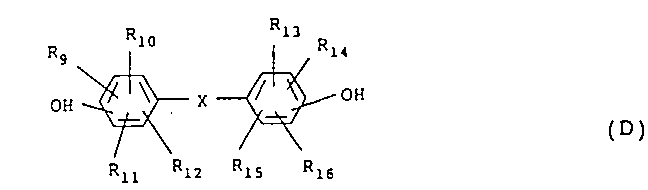 wherein R₉ to R₁₆ are the same as defined in the formula (B) described above.

### DETAILED DESCRIPTION OF THE INVENTION

The present invention is described in detail below.

The substituent which may be present in the groups in the definitions for R₁ to R₆ and R₉ to R₁₈ is a C₁₋₅ saturated or unsaturated hydrocarbon group, a C₁₋₅ alkoxy group, or a halogen atom (such as chlorine, bromine or iodine). Further, the substituent which may be present in the groups in the definition for R₇ is a C₁₋₅ saturated or unsaturated hydrocarbon group, a C₁₋₅ alkoxy group, a halogen atom (such as chlorine, bromine or iodine), a polydimethylsiloxy group, or a phthalimido group.

The polycarbonate of the present invention comprises the repeating unit represented by the formula (A) derived from the trihydric phenol compound represented by the formula (C) having the benzotriazole structure and the repeating unit represented by the formula (B) derived from the dihydric compound represented by the formula (D), wherein the content of the repeating unit represented by the formula (A) is from 0.1 to 90 mol% based on the mole of the total repeating units.

In the present invention, the polycarbonate comprising the repeating unit represented by the formula (A) and the repeating unit represented by the formula (B) can be obtained by reacting the trihydric phenol compound represented by the formula (C) having the benzotriazole structure and the dihydric phenol compound represented by the formula (D) with a carbonate precursor in the presence of a catalyst in a solvent inactive to the reaction.

Thus, the polycarbonate of the present invention can be obtained by conventional processes for producing a polycarbonate, such as a phosgene process (a solution process) which directly reacts with phosgene, or a pyridine process, except for using the trihydric phenol compound represented by the formula (C) and the dihydric phenol compound represented by the formula (D).

That is, in the phosgene process (an interfacial polymerization process), the trihydric phenol compound having a benzotriazole structure represented by the formula (C) and the dihydric phenol compound represented by the formula (D) are reacted with phosgene in the presence of an organic solvent inactive to the reaction and a catalyst (oxygen bonding agent), e.g., an alkali metal hydroxide such as sodium hydroxide, potassium hydroxide, etc., and a molecular weight modifier and a polymerization catalyst such as a tertiary amine or a quaternary ammonium salt are then added to the resulting reaction mixture to conduct the polymerization.

In the pyridine process, the trihydric phenol compound represented by the formula (C) having a benzotriazole structure and the dihydric phenol compound represented by the formula (D) are dissolved in pyridine or a mixed solvent of pyridine and other organic solvent inactive to the reaction together with a molecular weight modifier, and phosgene is blown into the solution to directly obtain the polycarbonate.

The reaction temperature is in the range of usually from 0°C to 150°C, and preferably from 5°C to 50°C. The reaction time depends upon the reaction temperature but is usually from 0.5 minute to 10 hours, and preferably from 1 minute to 2 hours.

Specific examples of the trihydric phenol compound represented by the formula (C) having a benzotriazole structure described above are illustrated below.

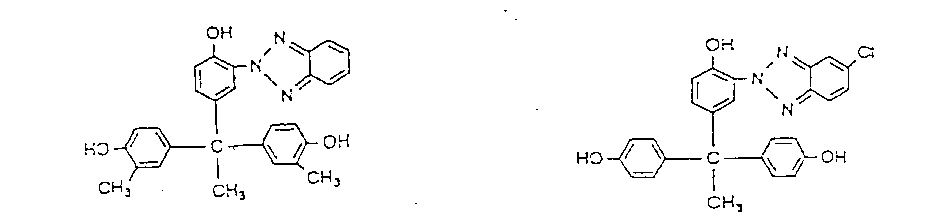

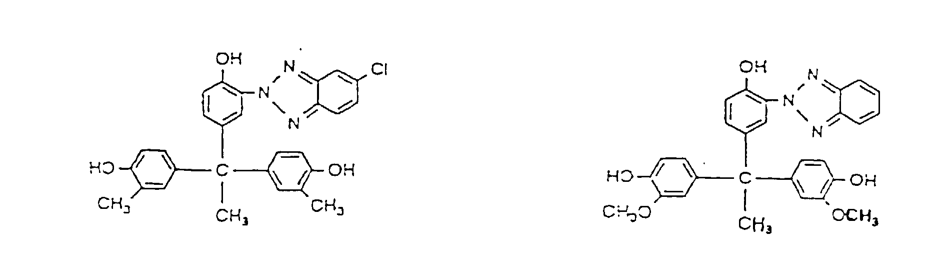

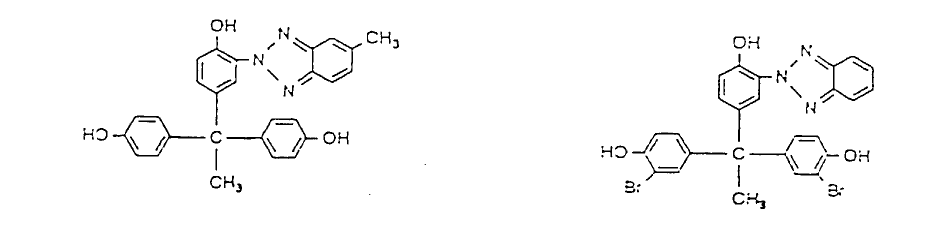

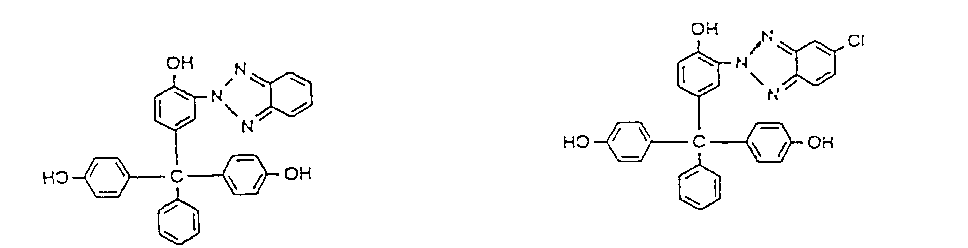

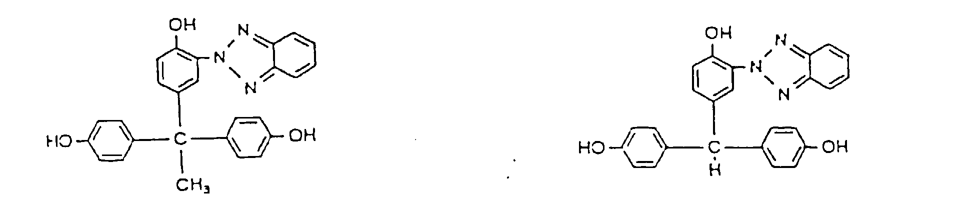

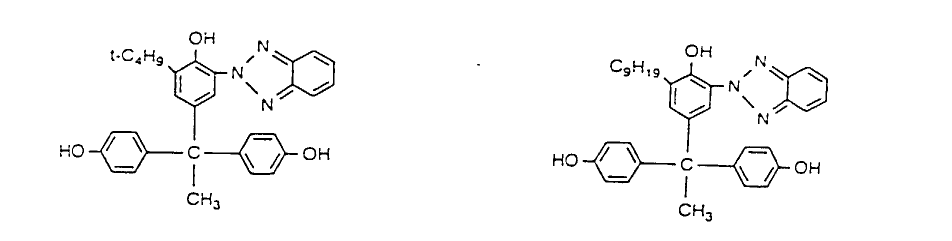

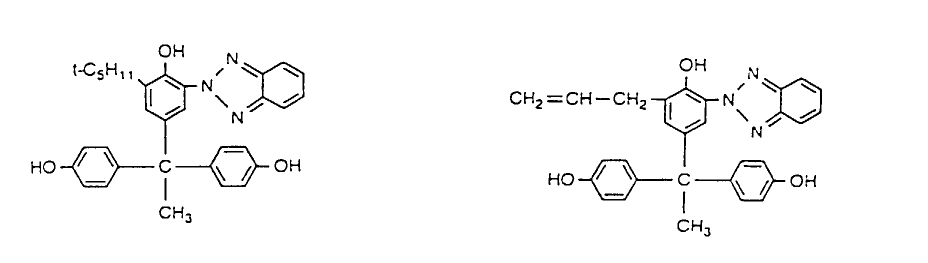

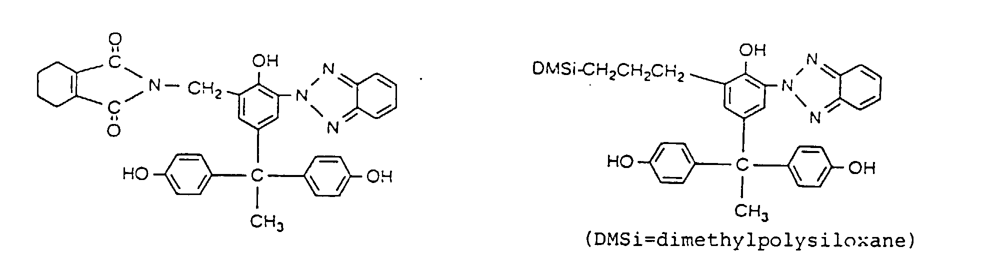

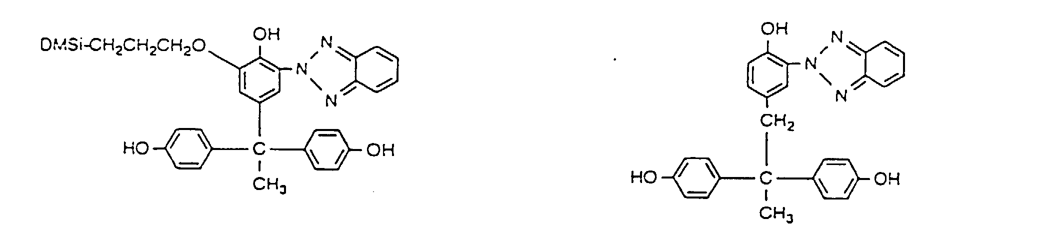

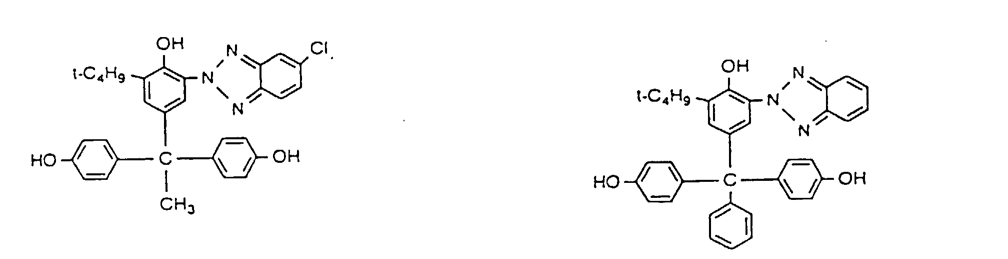

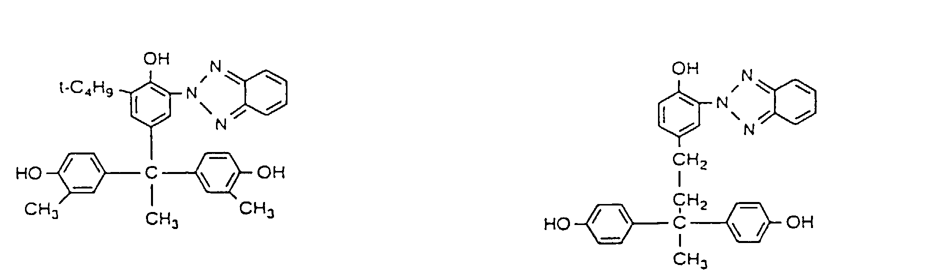

Those trihydric phenol compounds can be used alone or as a mixture thereof.

The trihydric phenol compound represented by the formula (C) having the benzotriazole structure used in the present invention can be obtained by a conventional method. For example, the trihydric phenol compound can be produced by diazotizing a nitroaniline derivative with nitrous acid, reacting the diazotization product with a phenol derivative in the presence of an alkali to azotize the product, and reduction-cyclizing the azotization product with zinc, a sulfur compound, etc.

The diazotization includes a method of directly reacting the nitroaniline derivative and nitrous acid and a method of reacting the nitroaniline derivative and a mineral acid solution of sodium nitrite, but from the industrial standpoint, a method of reacting the nitroaniline derivative and an aqueous hydrochloric acid solution of sodium nitrite at a low temperature of from 0°C to 5°C and then reacting the product obtained and a phenol derivative in the presence of sodium hydroxide or sodium carbonate to obtain the azo compound is generally used. The reduction-cyclization of the azo compound includes a chemical reduction method such as a reduction method using zinc or a sulfur compound in the presence of an alkali, a reduction method using an alcohol or a saccharide in the presence of a catalyst, a hydrogen reduction method using an organic cocatalyst and a metal catalyst, etc.; an electrolytic reduction method, etc.

Specific examples of the dihydric phenol compound represented by the formula (D) are bis(4-hydroxyphenyl)methane, bis(4bis(4-hydroxyphenyl)ether, bis(4bis(4-hydroxyphenyl)sulfone, bis(4-hydroxyphenyl)sulfoxide, bis(4-hydroxyphenyl)sulfide, bis(4-hydroxyphenyl)ketone, 1,1-bis(4-hydroxyphenyl)ethane, 2,2-bis(4-hydroxyphenyl)propane (bisphenol A: BPA), 2,2-bis(4-hydroxyphenyl)butane, 1,1-bis(4-hydroxyphenyl)cyclohexane (bisphenol Z: BPZ), 2,2-bis(4-hydroxy-3,5-dibromophenyl)-propane, 2,2-bis(4-hydroxy-3,5-dichlorophenyl)propane, 2,2-bis(4-hydroxy-3-bromophenyl)propane, 2,2-bis(4-hydroxy-3-methylphenyl)propane, 2,2-bis(4-hydroxy-3-chlorophenyl)propane, 2,2-bis(4-hydroxy-3,5-dimethylphenyl)propane, 1,1-bis(4-hydroxyphenyl)-1-phenylethane, bis(4-hydroxyphenyl)diphenyl-methane, and α,ω-bis[3-(o-hydroxyphenyl)propyl]polydimethyl siloxane.

Those compounds can be used alone or as a mixture thereof.

The present invention can also use a terminator or a molecular weight modifier. Examples of the terminator or the molecular weight modifier are compounds each having a monohydric phenolic hydroxyl group, and specific examples thereof are ordinary phenol, p-tert-butylphenol, tribromophenol, a long-chain alkylphenol, an aliphatic carboxylic acid chloride, an aliphatic carboxylic acid, an aromatic carboxylic acid, an aromatic acid chloride, a hydroxybenzoic acid alkyl ester, and an alkyl ether phenol.

Examples of the organic solvent inactive to the reaction used in the present invention are chlorinated hydrocarbons such as dichloromethane, 1,2-dichloroethane, 1,1,1-trichloroethane, 1,1,2,2-tetrachloroethane, chloroform, carbon tetrachloride, monochlorobenzene, dichlorobenzene, etc.; aromatic hydrocarbons such as benzene, toluene, xylene, ethylbenzene, etc.; and ether compounds such as diethyl ether, etc. Those organic solvents can be used alone or as a mixture thereof. If desired, a solvent having an affinity with water, such as ethers other than the above-described ether compounds, ketones, esters, nitriles, etc., can be used together with the above-described organic solvent(s) within the range that the mixed solvent does not completely compatibilize with water.

Examples of the polymerization catalyst used for producing the polycarbonate of the present invention are tertiary amines such as trimethylamine, triethylamine, tributylamine, tripropylamine, trihexylamine, tridecylamine, N,N-dimethylcyclohexylamine, pyridine, quinoline, dimethylaniline, etc.; and quaternary ammonium salts such as trimethylbenzylammonium chloride, tetramethylammonium chloride, triethylbenzylammonium chloride, etc.

Further, a branching agent can be used in the present invention, and by using the branching agent in an amount of from 0.01 to 3 mol%, and preferably from 0.1 to 1.0 mol% based on the mole of the above-described dihydric phenol compound, a branched polycarbonate can be obtained.

Examples of the branching agent are polyhydroxy compounds such as phloroglucin, 2,6-dimethyl-2,4,6-tri(4-hydroxyphenyl)heptene-3, 4,6-dimethyl-2,4,6-tri(4-hydroxyphenyl)heptene-2, 1,3,5-tri(2-hydroxyphenyl)benzol, 1,1,1-tri(4-hydroxyphenyl)ethane,2,6-bis(2-hydroxy-5-methylbenzyl)-4-methylphenol, α,α',α''-tri(4-hydroxyphenyl)-1,3,5-triisopropylbenzene, etc.; 3,3-bis(4-hydroxyphenyl)hydroxyindole (= isatin bisphenol); etc.

The trihydric phenol compound represented by the formula (C) having a benzotriazole structure used in the present invention may partially function as a branching agent, but the amount thereof is at most 10 mol% or less and the phenol compound substantially becomes the repeating unit represented by the formula (A) which constitutes the polycarbonate of the present invention.

The polycarbonate obtained by the above-described reactions can be molded by conventional molding methods such as extrusion molding, injection molding, blow molding or wet molding, but to facilitate the molding operation, the polycarbonate preferably has a limiting viscosity of 2.0 dl/g or less.

The present invention is described in more detail by reference to the following examples, but the invention is not construed as being limited thereto.

### EXAMPLE 1

In 580 ml of an aqueous solution of 8.8 w/v% sodium hydroxide were dissolved 142.8 g of a trihydric phenol represented by the following formula (1) (hereinafter referred to as "TBBZT") 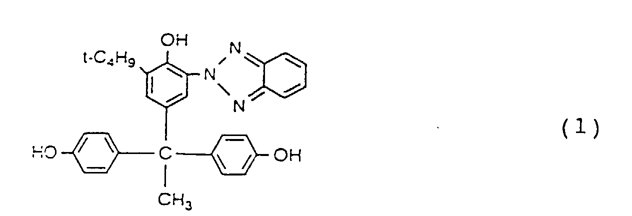 22.8 g of 2,2-bis(4-hydroxyphenyl)propane (hereinafter referred to as "BPA") and 0.1 g of hydrosulfite. 360 ml of methylene chloride was added to the solution, 2.0 g of p-tert-butylphenol was added to the resulting mixture with stirring while keeping the mixture at 15°C, and 51 g of phosgene was then introduced into the resulting mixture over a period of 50 minutes.

After completion of the introduction of phosgene, the reaction mixture was emulsified by stirring vigorously, and after the emulsification, 0.2 ml of triethylamine was added to the emulsion followed by stirring for about one hour to conduct the polymerization.

The polymer liquid obtained was separated into an aqueous phase and an organic phase, the organic phase was collected and neutralized with phosphoric acid. After washing the organic phase with water until the washings became neutral, 470 ml of isopropanol was added to the organic phase to precipitate a polymerization product thus formed. The precipitates were collected by filtration and dried to obtain a powdery polymer.

The limiting viscosity [η] of the polymer in a solution thereof using dichloromethane at a concentration of 0.5 g/100 ml at 20°C was 0.64 dl/g.

As a result of analyzing the polymer obtained above by an infrared absorption spectra, the absorption by a carbonyl group was confirmed at the position of 1,650 cm⁻¹ and the absorption by an ether bond was confirmed at the position of 1,240 cm⁻¹, which confirmed that the polymer obtained had a carbonate bond. Also, the absorptions originated from a hydroxyl group were observed at the positions of from 3,650 cm⁻¹ to 3,200 cm⁻¹.

When the monomers in the polycarbonate were measured by a GPC analysis, the contents of TBBZT and BPA each was 20 ppm or less. In addition, the molecular weight distribution of the polycarbonate obtained was larger than that of a general straight chain-type polycarbonate and this was considered to be the result that about 1.2% by mole of TBBZT functioned as a branching agent. Also, as a result of measurement by a colorimetric method, the amount of the phenolic hydroxyl group in the polycarbonate was 28,125 ppm.

As a result of the above, the polymer obtained was confirmed to be the polycarbonate having the following repeating units.

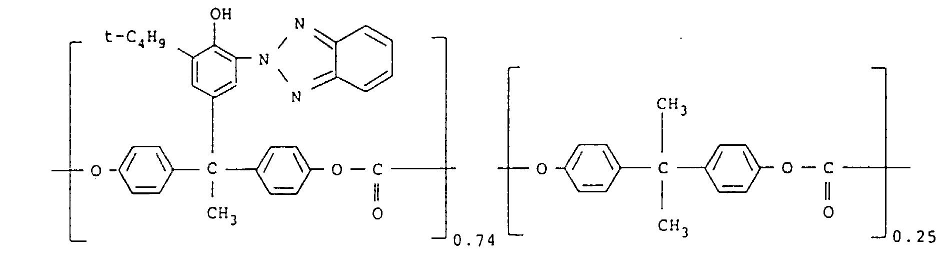

### EXAMPLE 2

The same procedure as in Example 1 was followed except that the amount of TBBZT was changed to 47.6 g and the amount of BPA was changed to 68.4 g.

The limiting viscosity [η] of the polymer obtained was 0.55 dl/g and by the same analyses such as the infrared absorption specra, etc., as in Example 1, the polymer obtained was confirmed to be the polycarbonate having the following repeating units.

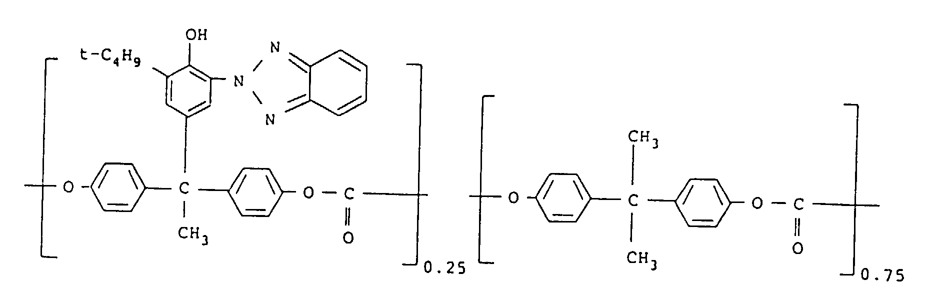

In addition, about 2.3% by mole of TBBZT functioned as a branching agent.

### EXAMPLE 3

The same procedure as in Example 1 was followed except that 26.8 g of 1,1-bis(4-hydroxyphenyl)cyclohexane was used in place of BPA.

The limiting viscosity [η] of the polymer obtained was 0.65 dl/g and by the same analyses such as the infrared absorption spectra, etc., as in Example 1, the polymer obtained was confirmed to be the polycarbonate having the following repeating units.

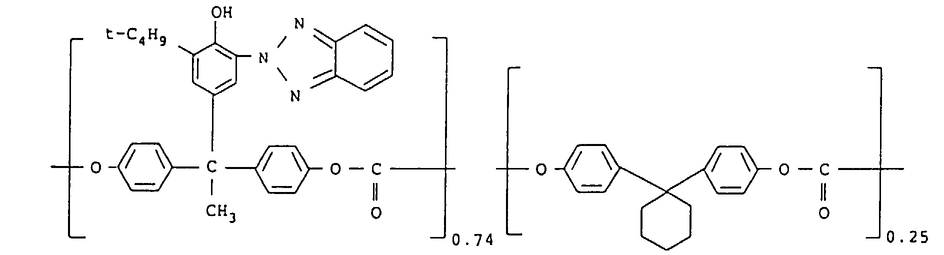

In addition, about 1.5% by mole of TBBZT functioned as a branching agent.

### EXAMPLE 4

The same procedure as in Example 1 was followed except that 126.9 g of a trihydric phenol represented by following formula (2) (hereinafter referred to as "BZT") was used in place of TBBZT.

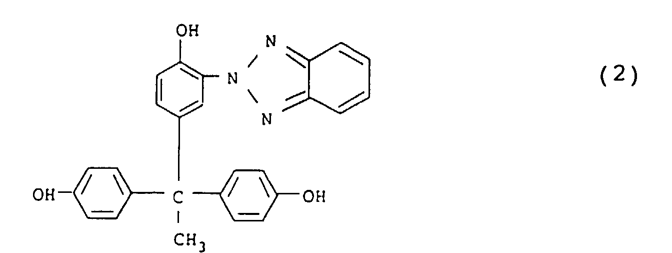

The limiting viscosity [η] of the polymer obtained was 1.01 dl/g and by the same analyses such as the infrared absorption spectra, etc., as in Example 1, the polymer was confirmed to be the polycarbonate having the following repeating units.

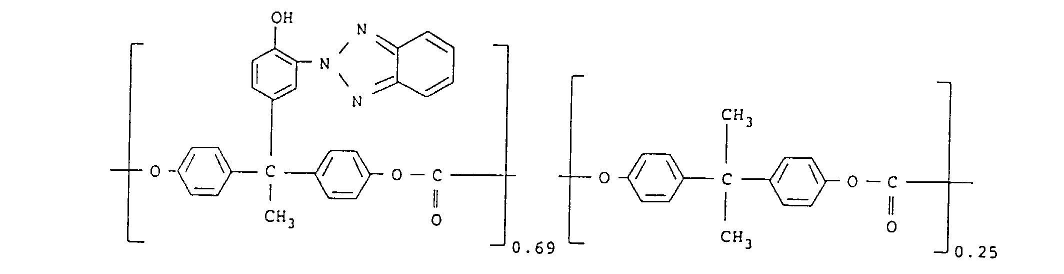

In addition, about 8.6% by mole of BZT functioned as a branching agent.

### EXAMPLE 5

The same procedure as in Example 1 was followed except that 90.2 g of a phenol having the following structural formula (3) (BZTM) was used in place of TBBZT and also 45.6 g of BPA was used.

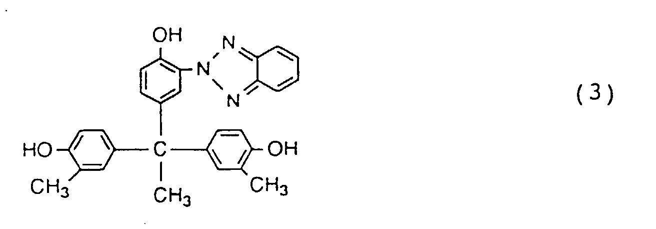

The limiting viscosity [η] of the polymer obtained was 0.82 dl/g and by the same analyses such as the infrared absorption spectra, etc., as in Example 1, the polymer obtained was confirmed to be the polycarbonate having the following repeating units.

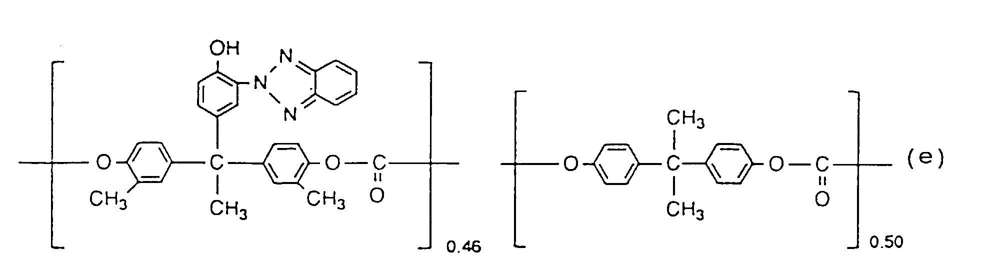

In addition, about 8.4% by mole of BZTM functioned as a branching agent.

### EXAMPLE 6

The same procedure as in Example 1 was followed except that 108.2 g of a phenol represented by the following formula (4) (TBBZTP) was used in place of TBBZT and 45.6 g of BPA was used.

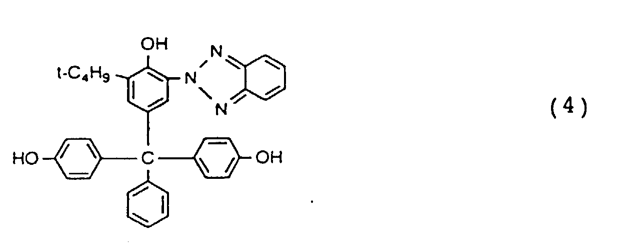

The limiting viscosity [η] of the polymer obtained was 0.63 dl/g and by the same analyses such as the infrared absorption spectra, etc., as in Example 1, the polymer was confirmed to be the polycarbonate having the following repeating units.

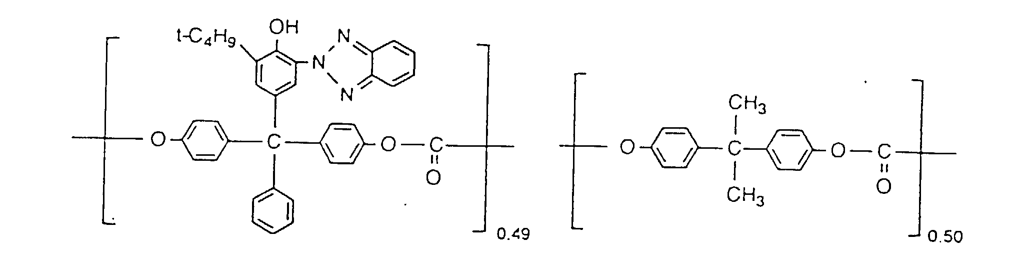

In addition, about 2.1% by mole of TBBZTP functioned as a branching agent.

### EXAMPLE 7

The same procedure as in Example 1 was followed except that 255.6 g of a phenol represented by the following formula (5) (SiBZT) was used in place of TBBZT and 45.6 of of BPA was used.

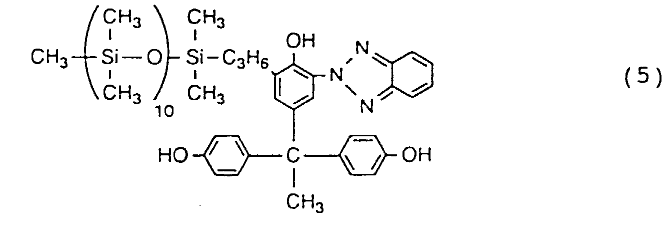

The limiting viscosity [η] of the polymer obtained was 0.69 dl/g and by the same analyses such as the infrared absorption spectra, etc., as in Example 1, the polymer was confirmed to be the polycarbonate having the following repeating units. In addition, about 0.4% by mole of SiBZT functioned as a branching agent.

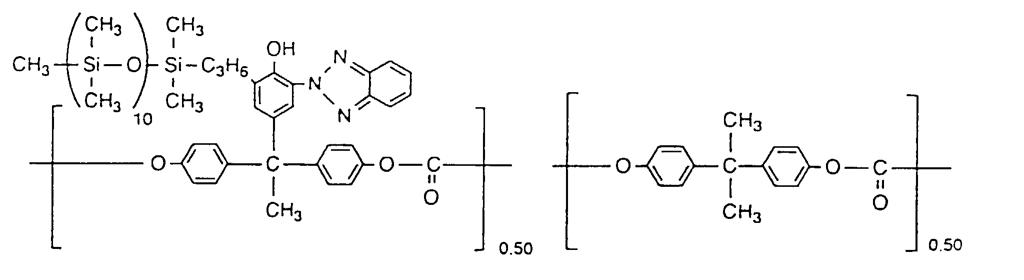

### COMPARATIVE EXAMPLE

The same procedure as in Example 1 was followed except that TBBZT was not used and 91.2 g of BPA only was used.

The limiting viscosity [η] of the polymer obtained was 0.50 dl/g and by the same analyses such as the infrared absorption spectra, etc., as in Example 1, the polymer was confirmed to be the polycarbonate having the following structural unit.

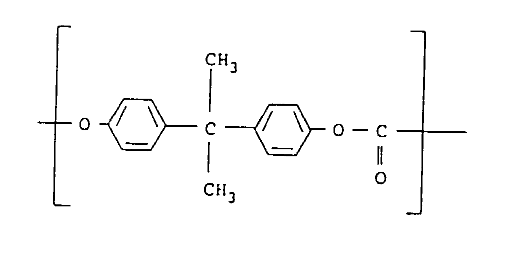

The analytical results of the polycarbonates obtained in the above Examples and Comparative Example are shown in the Table below.

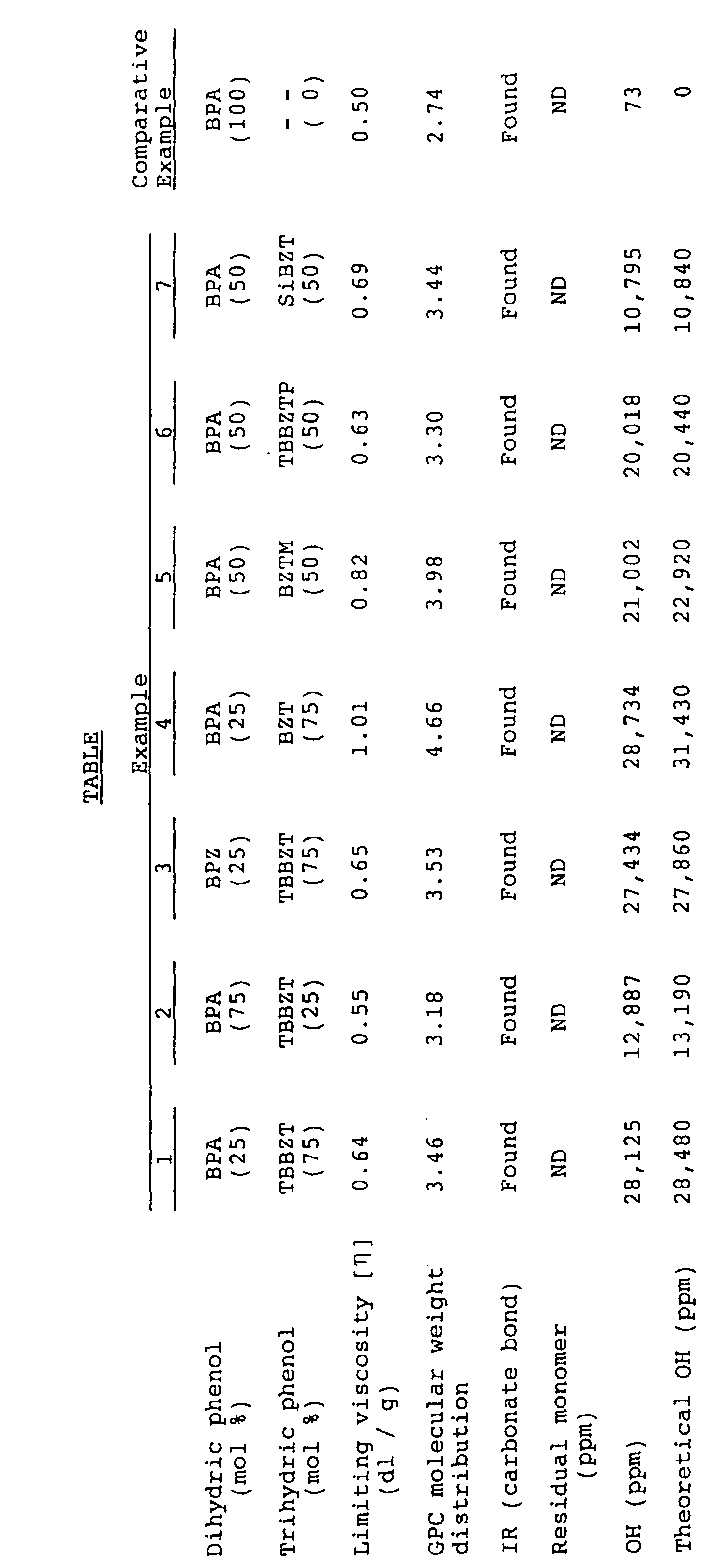

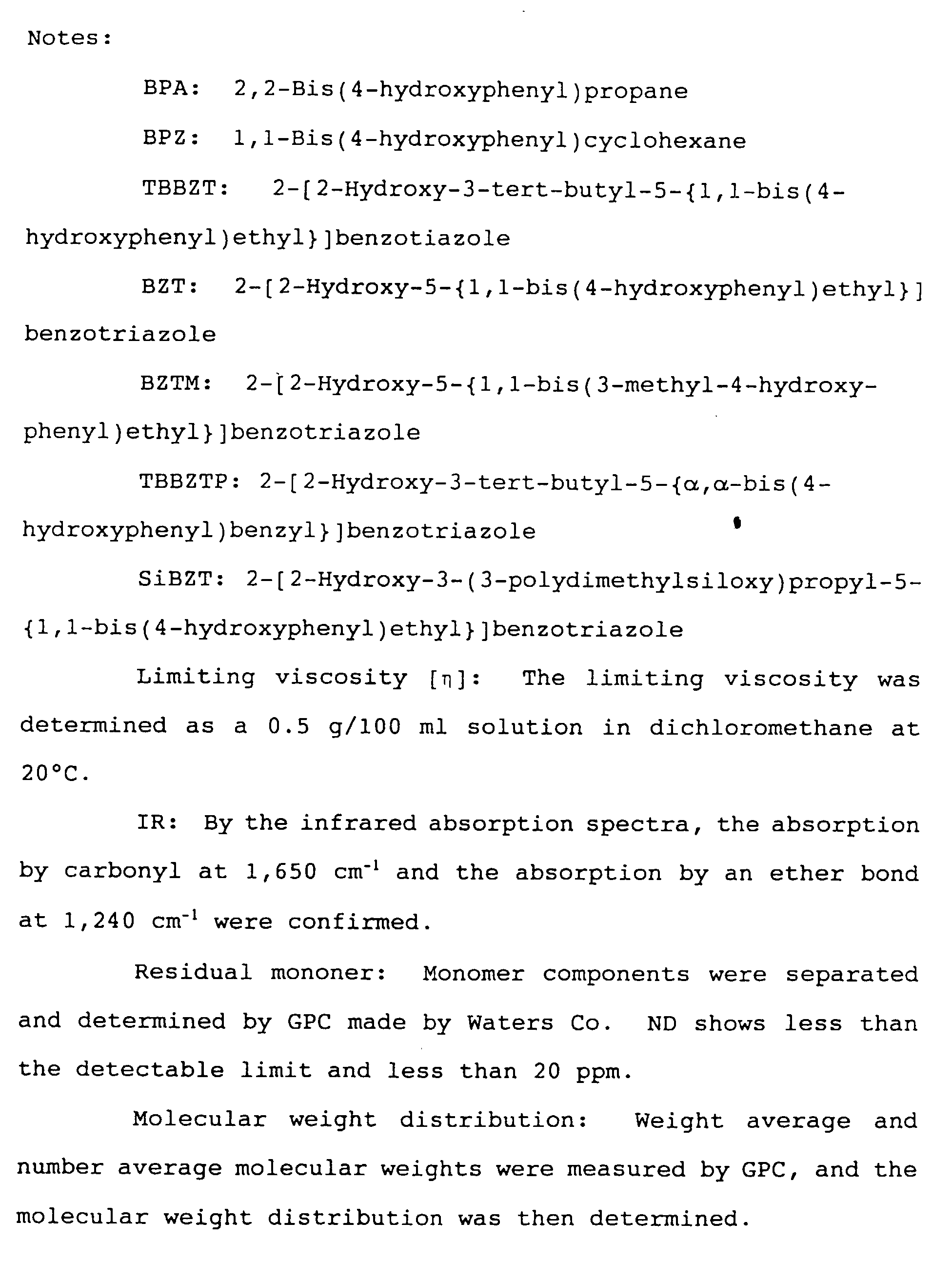

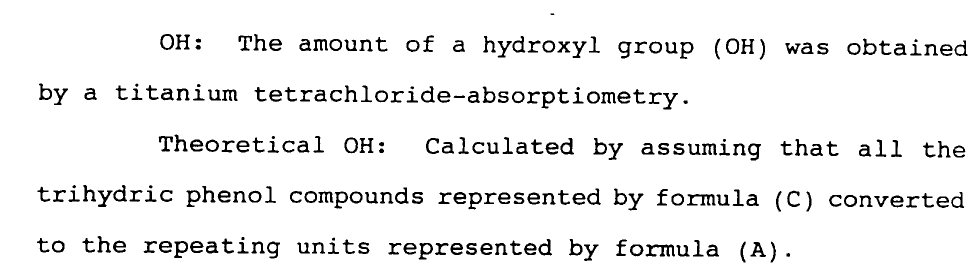

While the invention has been described in detail and with reference to specific examples hereof, it will be apparent to one skilled in the art that various changes and modifications can be made therein without departing from the spirit and scope thereof.

## Claims

1. A polycarbonate comprising a repeating unit represented by the following formula (A) having a benzotriazole structure and a repeating unit represented by the following formula (B), wherein the content of the repeating unit represented by the formula (A) is from 0.1 to 90% by mole based on the mole of total repeating units; 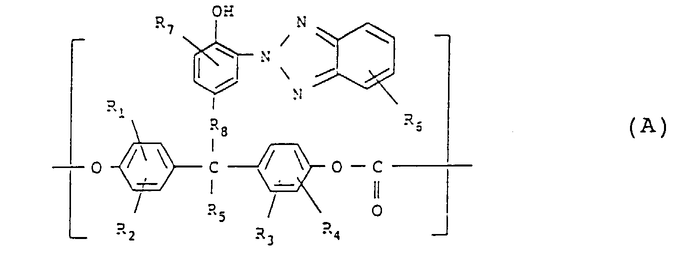 wherein R₁ to R₆ each represents a hydrogen atom, a halogen atom, a C₁₋₅ alkyl group which may have a substituent, a C₆₋₁₂ aryl group which may have a substituent, a C₇₋₁₇ aralkyl group which may have a substituent, a C₂₋₅ alkenyl group which may have a substituent, or a C₁₋₅ alkoxy group which may have a substituent, R₇ represents a hydrogen atom, a C₁₋₁₀ alkyl group which may have a substituent, a C₆₋₁₈ aryl group which may have a substituent, a C₇₋₂₈ aralkyl group which may have a substituent, a C₁₋₁₀ alkenyl group which may have a substituent, or a C₁₋₁₀ alkoxy group which may have a substituent and R₈ represents -(CH₂)ₐ- (wherein a represents an integer of 0 or at least 1); 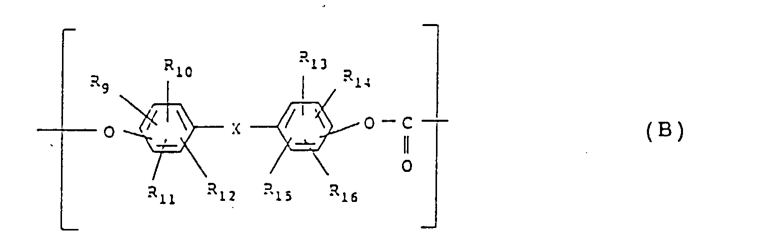 wherein R₉ to R₁₆ each represents a hydrogen atom, a halogen atom, a C₁₋₅ alkyl group which may have a substituent, a C₆₋₁₂ aryl group which may have a substituent, a C₇₋₁₇ aralkyl group which may have a substituent, a C₂₋₅ alkenyl group which may have a substituent, or a C₁₋₅ alkoxy group which may have a substituent; X represents 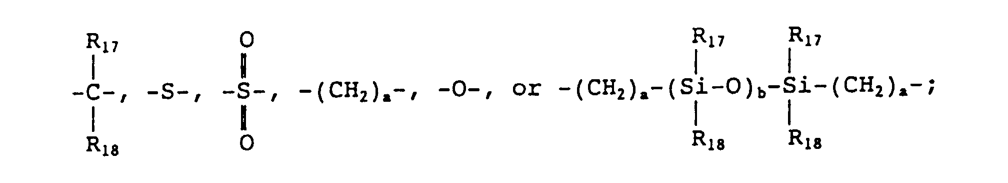 wherein R₁₇ and R₁₈ each represents a hydrogen atom, a halogen atom, a C₁₋₅ alkyl group which may have a substituent, or a C₆₋₁₂ aryl group which may have a substituent, or R₁₇ and R₁₈ represent groups which together form a carbocyclic ring or a heterocyclic ring; and a and b each represents an integer of at least 1.

2. A polycarbonate as claimed in claim 1, wherein the repeating unit represented by the formula (A) is derived from a trihydric phenol compound having a benzotriazole structure represented by the following formula (C): 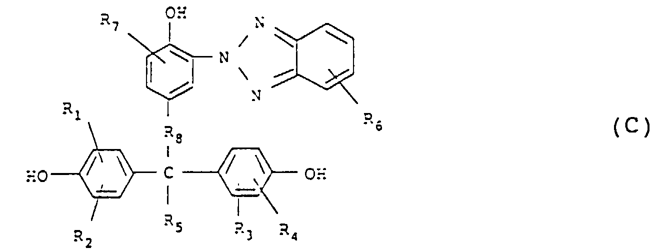 wherein R₁ to R₈ are the same as defined in the formula (A).

3. A polycarbonate as claimed in claim 1, wherein the trihydric phenol compound having a benzotriazole structure represented by the formula (C) is at least one selected from the group consisting of the compounds represented by the following formulae;

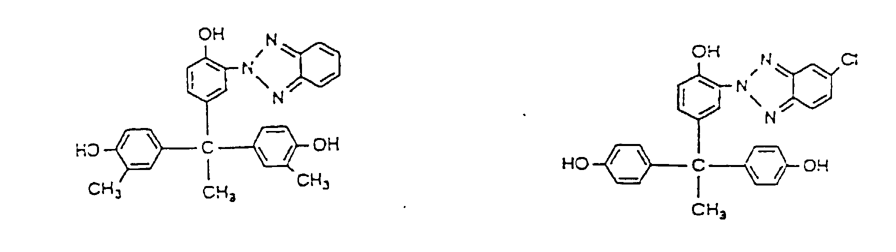

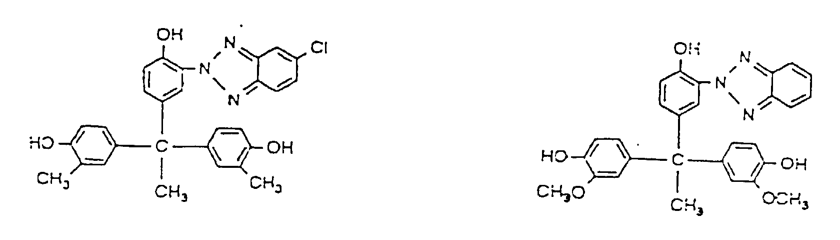

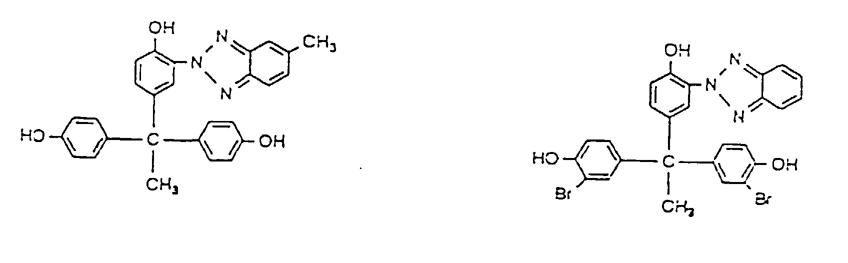

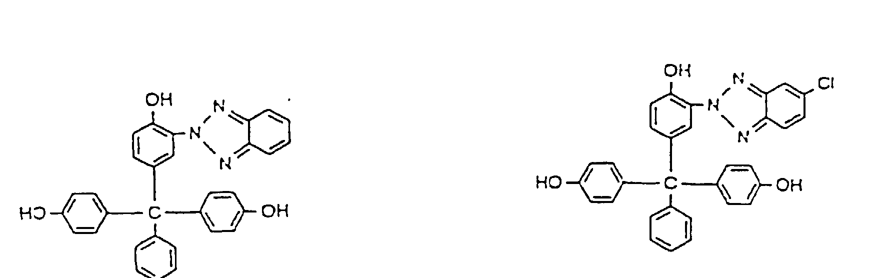

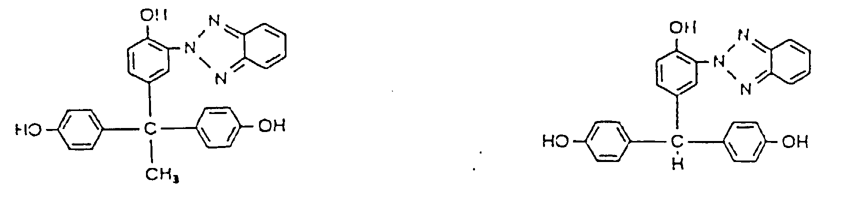

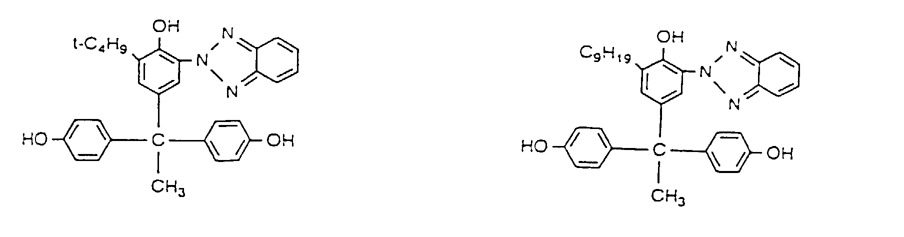

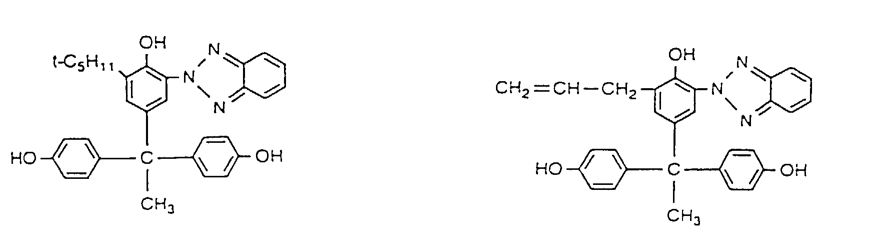

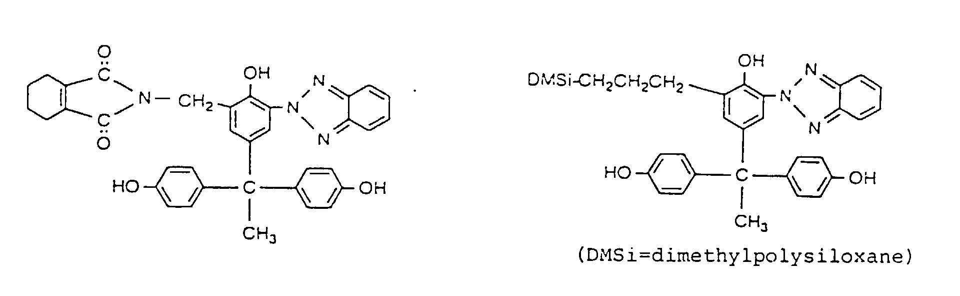

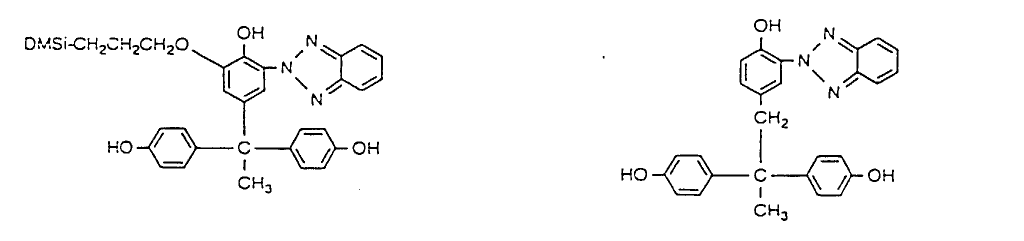

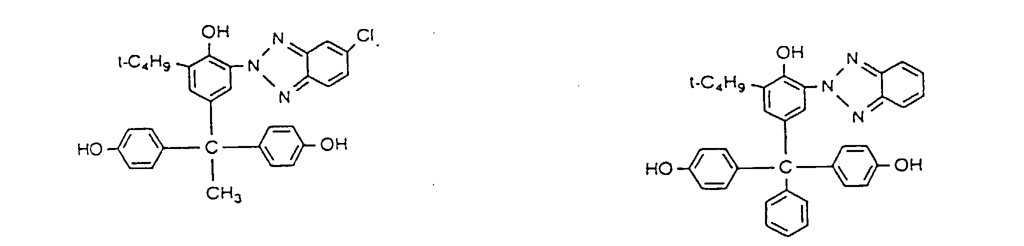

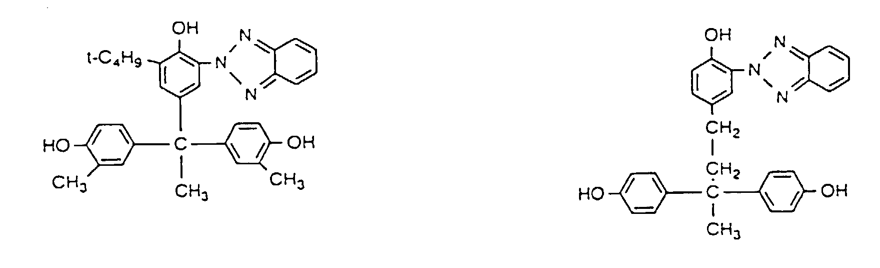

4. A polycarbonate as claimed in claim 1, wherein the trihydric phenol compound having a benzotriazole structure represented by the formula (C) is at least one selected from the group consisting of the compounds represented by the following formulae;

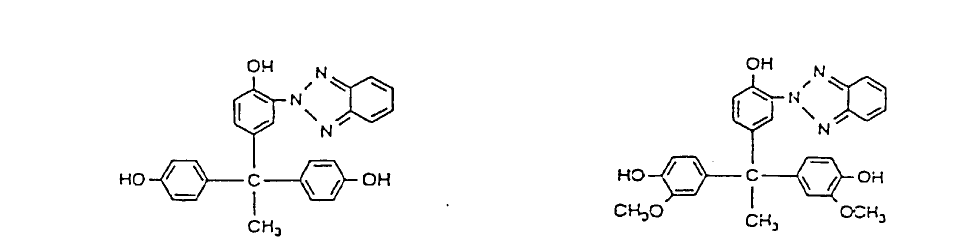

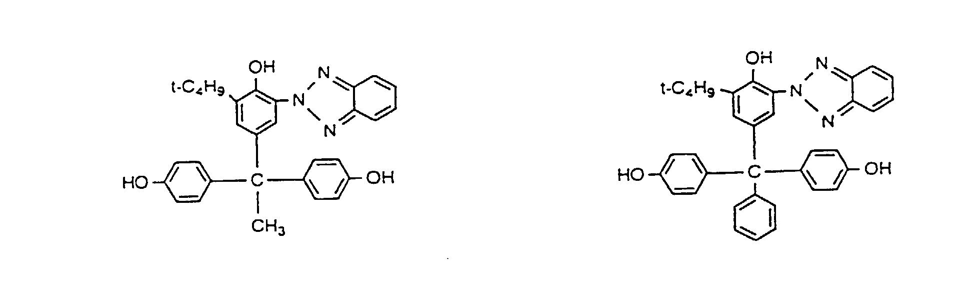

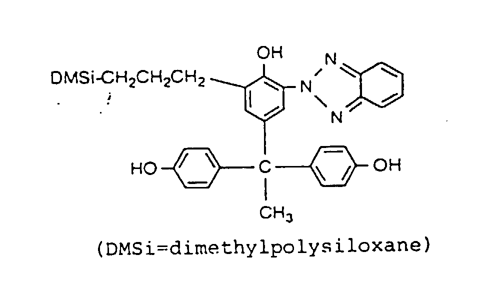

5. A polycarbonate as claimed in claim 1, wherein the repeating unit represented by the formula (B) is derived from a dihydric phenol compound represented by the following formula (D): 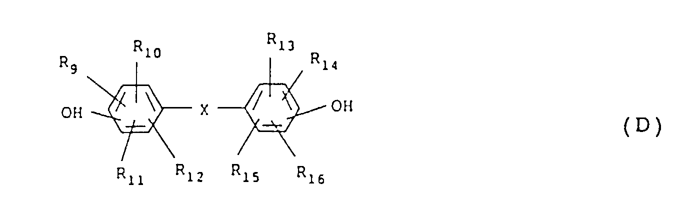 wherein R₉ to R₁₆ are the same as defined in the formula (B).

6. A polycarbonate as claimed in claim 1, wherein the dihydric phenol compound represented by the formula (D) is at least one selected the group consisting of bis(4-hydroxyphenyl)methane, bis(4-hydroxyphenyl)ether, bis(4-hydroxyphenyl)sulfone, bis (4-hydroxyphenyl)sulfite, bis(4-hydroxyphenyl)sulfoxide, bis(4-hydroxyphenyl)ketone, 1,1-bis(4-hydroxyphenyl)ethane, 2,2-bis(4-hydroxyphenyl)propane, 2,2-bis(4-hydroxyphenyl)butane, 1,1-bis(4-hydroxyphenyl)-cyclohexane, 2,2-bis(4-hydroxy-3,5-dibromophenyl)propane, 2,2-bis(4-hydroxy-3,5-dichlorophenyl)propane, 2,2-bis(4-hydroxy -3-bromophenyl)propane, 2,2-bis(4-hydroxy-3-chlorophenyl)propane, 2,2-bis(4-hydroxy-3-methylphenyl) propane, 2,2-bis(4-hydroxy-3,5-dimethylphenyl)propane, 1,1-bis(4-hydroxyphenyl)-1-phenylethane, bis(4-hydroxyphenyl)diphenyl methane, and α,ω-bis[3-(o-hydroxyphenyl)propyl]dimethyl siloxane.

7. A polycarbonate as claimed in claim 1, wherein the dihydric phenol compound represented by the formula (D) is at least one selected from the group consisting of 2,2-bis(4-hydroxyphenyl)propane, 2,2-bis(4-hydroxyphenyl)butane, 1,1-bis(4-hydroxyphenyl)cyclohexane, 2,2-bis(4-hydroxy-3,5-dibromophenyl)propane, 2,2-bis(4-hydroxy-3,5-dichlorophenyl)-propane, and 1,1-bis(4-hydroxyphenyl)ethane.

8. A process for producing a polycarbonate comprising a repeating unit represented by the following formula (A) and a repeating unit represented by the following formula (B), which comprises reacting a trihydric phenol compound having a benzotriazole structure represented by the following formula (C) and a dihydric phenol compound represented by the following formula (D) with a carbonate precursor in the presence of a catalyst and a solvent, and then polymerizing the reaction mixture in the presence of a polymerization catalyst, 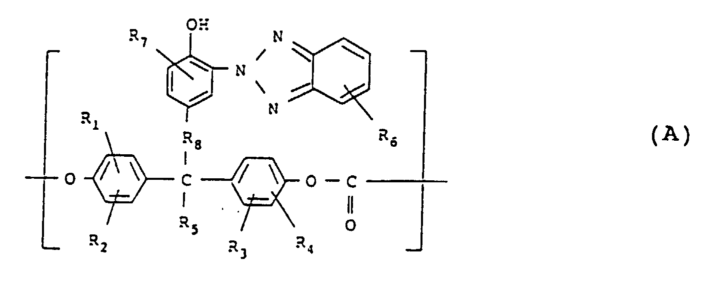 wherein R₁ to R₆ each represents a hydrogen atom, a halogen atom, a C₁₋₅ alkyl group which may have a substituent, a C₆₋₁₂ aryl group which may have a substituent, a C₇_₁₇ aralkyl group which may have a substituent, a C₂₋₅ alkenyl group which may have a substituent, or a C₁₋₅ alkoxy group which may have a substituent, R₇ represents a hydrogen atom, a C₁₋₁₀ alkyl group which may have a substituent, a C₆₋₁₈ aryl group which may have a substituent, a C₇₋₂₈ aralkyl group which may have a substituent, a C₁₋₁₀ alkenyl group which may have a substituent, or a C₁₋₁₀ alkoxy group which may have a substituent and R₈ represents - (CH₂)ₐ- (wherein a represents an integer of 0 or at least 1) ; 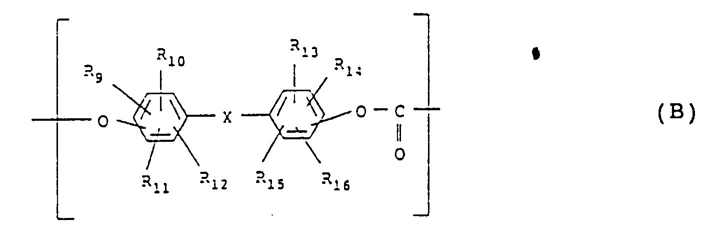 wherein R₉ to R₁₆ each represents a hydrogen atom, a halogen atom, a C₁₋₅ alkyl group which may have a substituent, a C₆₋₁₂ aryl group which may have a substituent, a C₇₋₁₇ aralkyl group which may have a substituent, a C₂₋₅ alkenyl group which may have a substituent, or a C₁₋₅ alkoxy group which may have a substituent; X represents 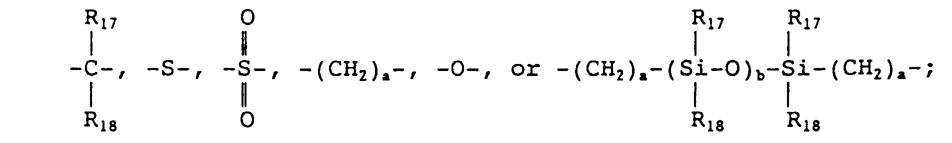 wherein R₁₇ and R₁₈ each represents a hydrogen atom, a halogen atom, a C₁₋₅ alkyl group which may have a substituent, or a C₆₋₁₂ aryl group which may have a substituent, or R₁₇ and R₁₈ represent groups which together form a carbocyclic ring or a heterocyclic ring; and a and b each represents an integer of at least 1; 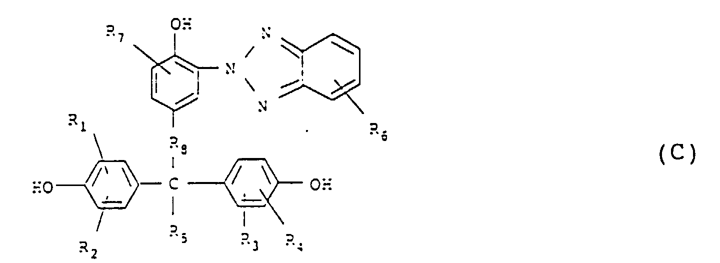 wherein R₁ to R₈ are the same as defined in the formula (A); 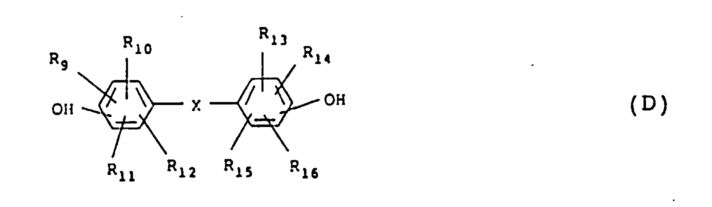 wherein R₉ to R₁₆ are the same as defined in the formula (B).

9. A process for producing the polycarbonate as claimed in claim 8, wherein the carbonate precursor is phosgene.

10. A process for producing the polycarbonate as claim in claim 8, wherein the catalyst is pyridine, sodium hydroxide or potassium hydroxide.

11. A process for producing the polycarbonate as claimed in claim 8, wherein the reaction is conducted in the presence of at least one polymerization catalyst selected from tertiary amines and quaternary ammonium salts.

12. A process for producing the polycarbonate as claimed in claim 8, wherein at least one solvent selected from the group consisting of methylene chloride, dichloromethane, 1,2-dichloroethane, 1,1,2,2-tetrachloroethane, chloroform, 1,1,1-trichloroethane, tetrachloromethane, monochlorobenzene and dichlorobenzene is used.

## Patentansprüche

1. Polycarbonat, umfassend eine sich wiederholende Einheit der folgenden Formel (A) mit Benzotriazolstruktur und eine sich wiederholende Einheit der folgenden Formel (B), worin der Gehalt der sich wiederholenden Einheit der Formel (A) 0,1 bis 90 Mol-% auf Basis der Gesamtmolzahl der sich wiederholenden Einheiten beträgt; 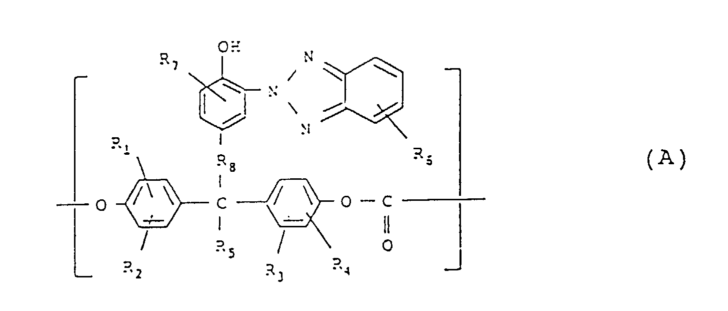 worin R₁ bis R₆ jeweils ein Wasserstoffatom, ein Halogenatom, eine C₁₋₅-Alkyl-Gruppe, die einen Substituenten aufweisen kann, eine C₆₋₁₂-Aryl-Gruppe, die einen Substituenten aufweisen kann, eine C₁₋₁₇-Aralkyl-Gruppe, die einen Substituenten aufweisen kann, eine C₂₋₅-Alkenyl-Gruppe, die einen Substituenten aufweisen kann oder eine C₁₋₅-Alkoxy-Gruppe, die einen Substituenten aufweisen kann, repräsentieren, R₇ repräsentiert ein Wasserstoffatom, eine C₁₋₁₀-Alkyl-Gruppe, die einen Substituenten aufweisen kann, eine C₆₋₁₈-Aryl-Gruppe, die einen Substituenten aufweisen kann, eine C₇₋₂₈-Aralkyl-Gruppe, die einen Substituenten aufweisen kann, eine C₁₋₁₀-Alkenyl-Gruppe, die einen Substituenten aufweisen kann oder eine C₁₋₁₀-Alkoxy-Gruppe, die einen Substituenten aufweisen kann, und R₈ repräsentiert -(CH₂)ₐ- (worin a eine ganze Zahl von 0 oder mindestens 1 repräsentiert); 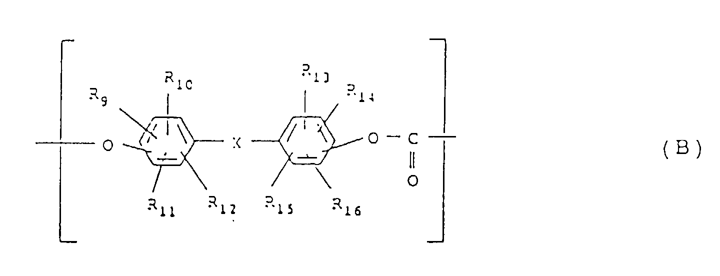 worin R₉ bis R₁₆ jeweils ein Wasserstoffatom, ein Halogenatom, eine C₁₋₅-Alkyl-Gruppe, die einen Substituenten aufweisen kann, eine C₆₋₁₂-Aryl-Gruppe, die einen Substituenten aufweisen kann, eine C₇₋₁₇-Aralkyl-Gruppe, die einen Substituenten aufweisen kann, eine C₂₋₅-Alkenyl-Gruppe, die einen Substituenten aufweisen kann oder eine C₁₋₅-Alkoxy-Gruppe, die einen Substituenten aufweisen kann, repräsentieren; X repräsentiert 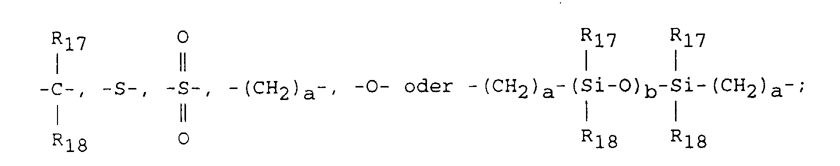 worin R₁₇ und R₁₈ jeweils ein Wasserstoffatom, ein Halogenatom, eine C₁₋₅-Alkyl-Gruppe, die einen Substituenten aufweisen kann oder eine C₆-₁₂-Aryl-Gruppe, die einen Substituenten aufweisen kann, repräsentieren, oder R₁₇ und R₁₈ repräsentieren Gruppen, die miteinander einen carbocyclischen oder einen heterocyclischen Ring bilden, und a und b repräsentieren jeweils eine ganze Zahl von mindestens 1.

2. Polycarbonat gemäß Anspruch 1, worin die sich wiederholende Einheit der Formel (A) von einer dreiwertigen Phenol-Verbindung mit Benzotriazolstruktur der folgenden Formel (C) abgeleitet ist: 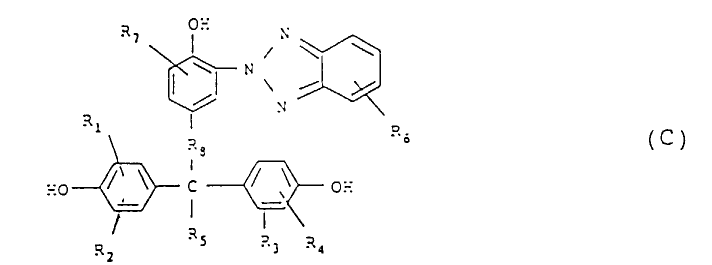 worin R₁ bis R₈ wie in Formel (A) definiert sind.

3. Polycarbonat gemäß Anspruch 1, worin die dreiwertige Phenol-Verbindung mit Benzotriazol-Struktur der Formel (C) mindestens eine aus den Verbindungen der folgenden Formeln ausgewählte Verbindung ist:

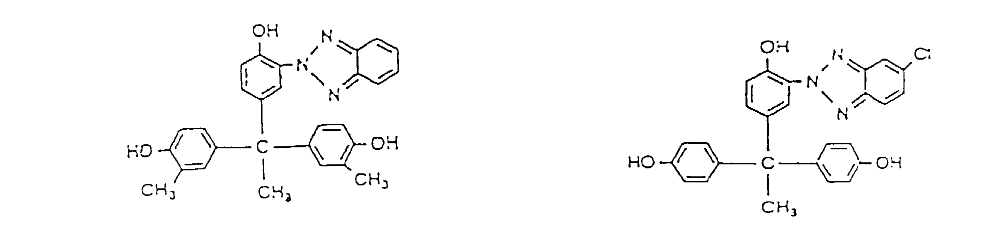

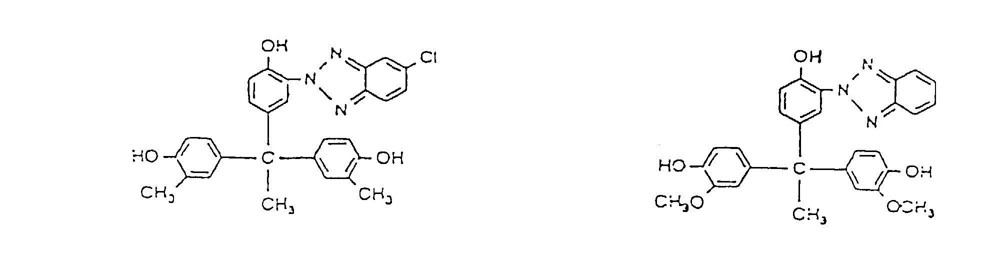

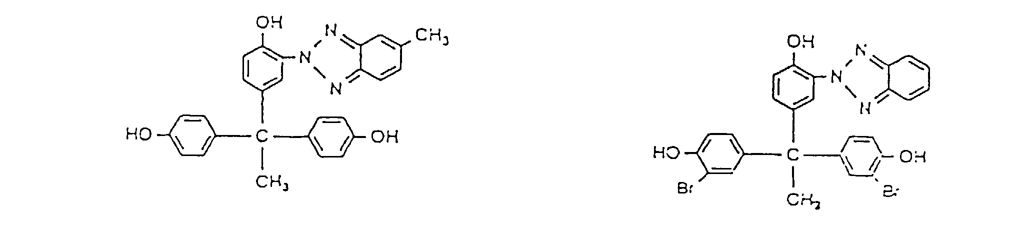

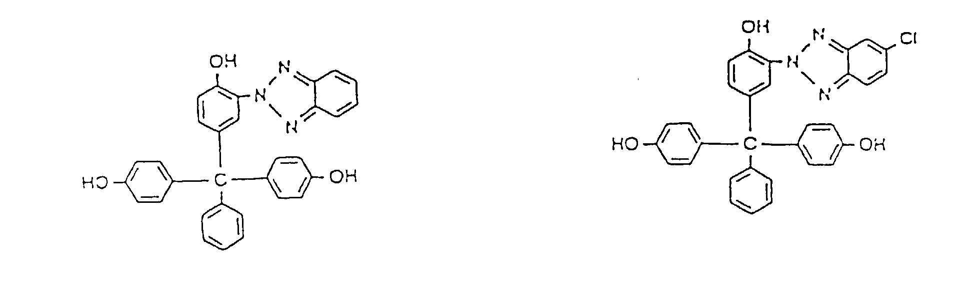

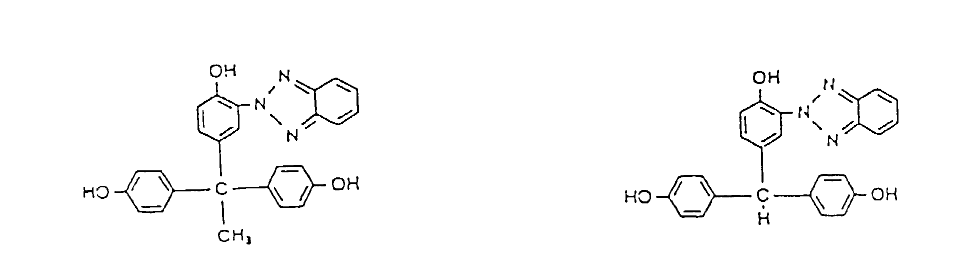

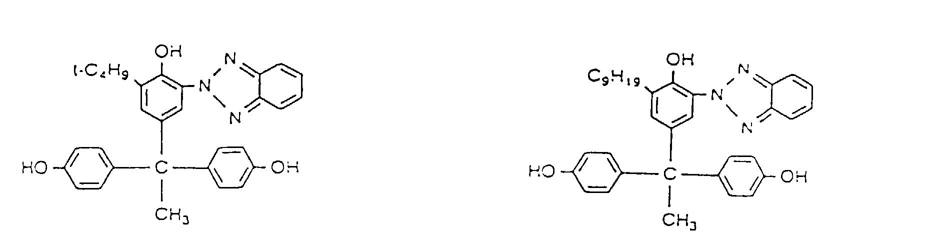

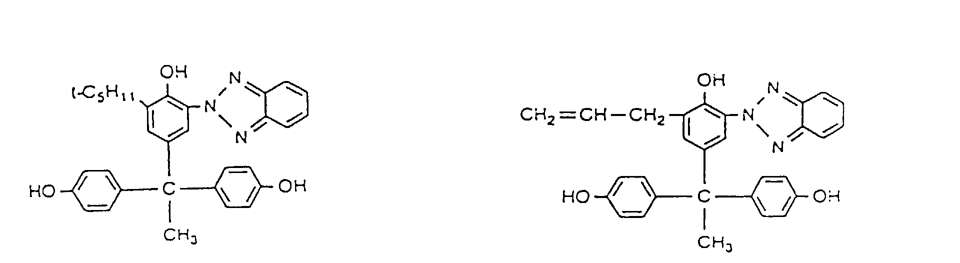

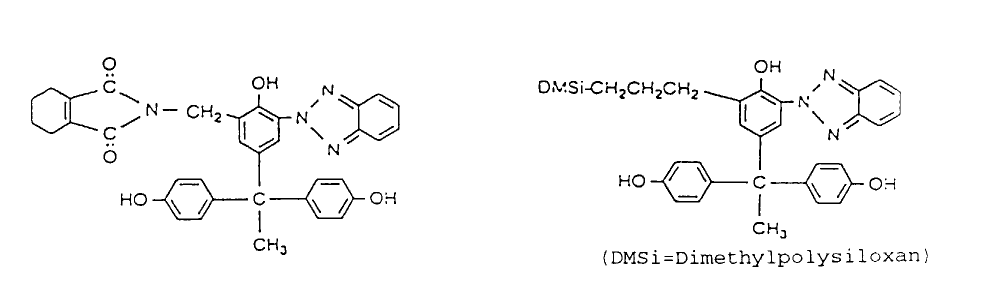

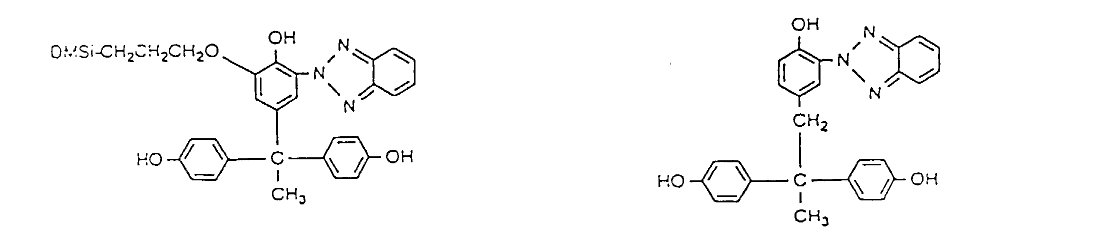

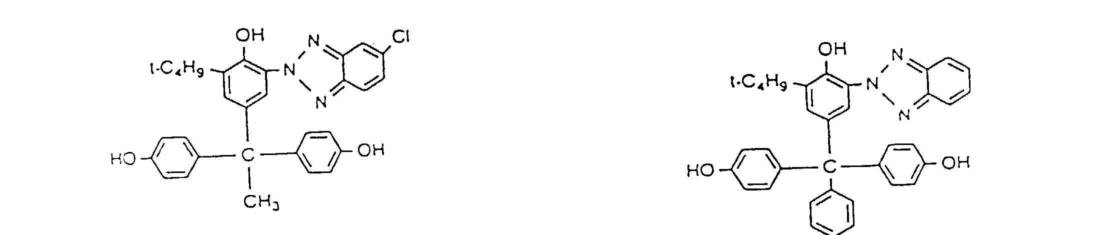

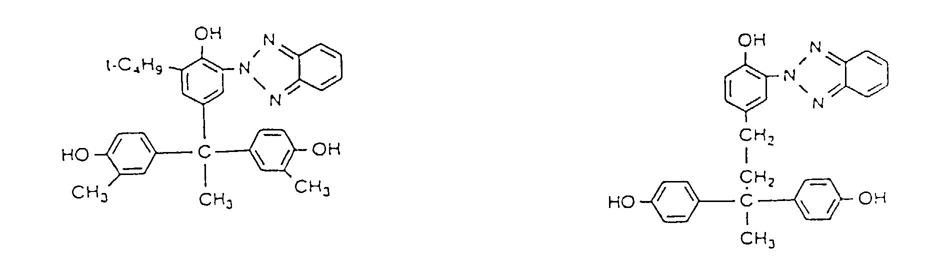

4. Polycarbonat gemäß Anspruch 1, worin die dreiwertige Phenol-Verbindung mit Benzotriazolstruktur der Formel (C) mindestens eine aus den Verbindungen der folgenden Formeln ausgewählte Verbindung ist:

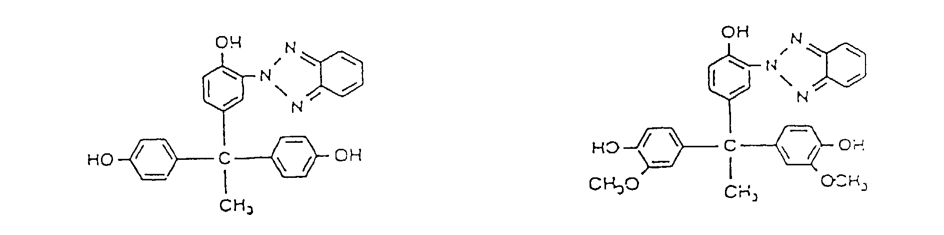

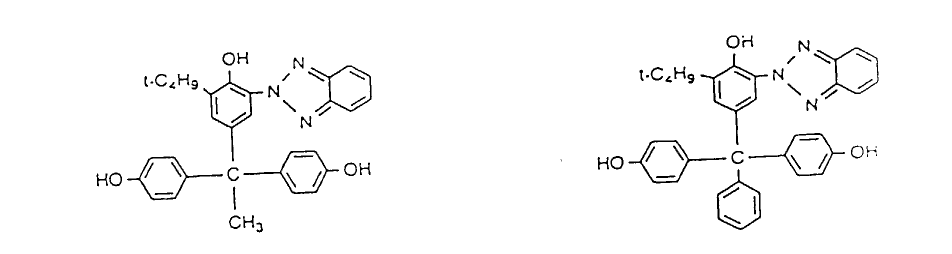

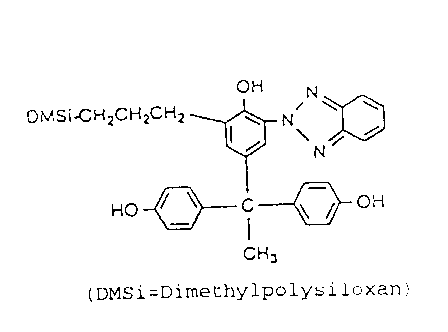

5. Polycarbonat gemäß Anspruch 1, worin die sich wiederholende Einheit der Formel (B) abgeleitet ist von einer zweiwertigen Phenol-Verbindung mit der folgenden Formel (D): 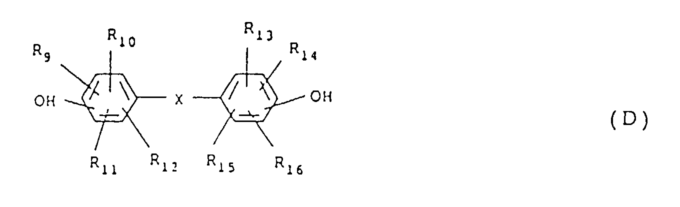 worin R₉ bis R₁₆ wie in Formel (B) definiert sind.

6. Polycarbonat gemäß Anspruch 1, worin die zweiwertige Phenol-Verbindung der Formel (D) mindestens eine ist, ausgewählt aus Bis(4-hydroxyphenyl)methan, Bis(4-hydroxyphenyl)ether, Bis(4-hydroxyphenyl)sulfon, Bis (4-hydroxyphenyl)sulfit, Bis(4-hydroxyphenyl)sulfoxid, Bis(4-hydroxyphenyl)keton, 1,1-Bis(4-hydroxyphenyl) ethan, 2,2-Bis (4-hydroxyphenyl)propan, 2,2-Bis(4-hydroxyphenyl)butan, 1, 1-Bis(4-hydroxyphenyl)-cyclohexan, 2,2-Bis (4-hydroxy-3,5-dibromphenyl)propan, 2,2-Bis(4-hydroxy-3,5-dichlorphenyl)propan, 2,2-Bis-(4-hydroxy-3-bromphenyl)propan, 2,2-Bis(4-hydroxy-3-chlorphenyl)propan, 2,2-Bis(4-hydroxy-3-methylphenyl)-propan, 2,2-Bis (4-hydroxy-3,5-dimethylphenyl)propan, 1,1-Bis(4-hydroxyphenyl-1-phenylethan, Bis(4-hydroxyphenyl)diphenylmethan und α,ω-Bis[3-(o-hydroxyphenyl)propyl]dimethylsiloxan.

7. Polycarbonat gemäß Anspruch 1, worin die zweiwertige Phenol-Verbindung der Formel (D) mindestens eine ist, ausgewählt aus 2,2-Bis(4-hydroxyphenyl)propan, 2,2-Bis(4-hydroxyphenyl)butan, 1, 1-Bis(4-hydroxyphenyl)-chyclohexan, 2,2-Bis(4-hydroxy-3,5-dibromphenyl)propan, 2,2-Bis(4-hydroxy-3,5-dichlorphenyl)propan und 1,1-Bis (4-hydroxyphenyl)ethan.

8. Verfahren zur Herstellung eines Polycarbonats, das eine sich wiederholende Einheit der folgenden Formel (A) und eine sich wiederholende Einheit der folgenden Formel (B) umfaßt, umfassend die Reaktion einer dreiwertigen Phenol-Verbindung mit Benzotriazolstruktur mit der folgenden Formel (C) und einer zweiwertigen Phenyl-Verbindung der folgenden Formel (D) mit einem Carbonat-Precursor in Gegenwart eines Katalysators und eines Lösungsmittels und die anschließende Polymerisation der Reaktionsmischung in Gegenwart eines Polymerisationskatalysators, 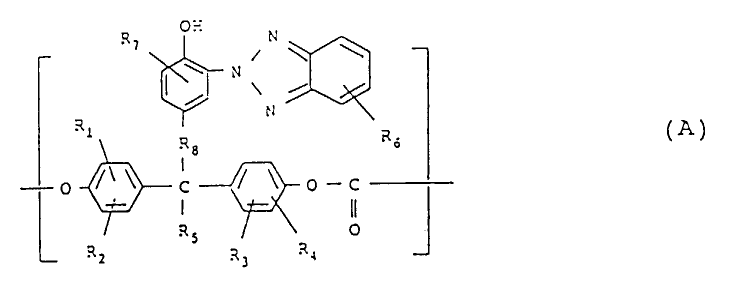 worin R₁ bis R₆ jeweils ein Wasserstoffatom, ein Halogenatom, eine C₁₋₅-Alkyl-Gruppe, die einen Substituenten aufweisen kann, eine C₆₋₁₂-Aryl-Gruppe, die einen Substituenten aufweisen kann, eine C₁₋₁₇-Aralkyl-Gruppe, die einen Substituenten aufweisen kann, eine C₂₋₅-Alkenyl-Gruppe, die einen Substituenten aufweisen kann oder eine C₁₋₅-Alkoxy-Gruppe, die einen Substituenten aufweisen kann, repräsentieren, R₇ repräsentiert ein Wasserstoffatom, eine C₁₋₁₀-Alkyl-Gruppe, die einen Substituenten aufweisen kann, eine C₆₋₁₈-Aryl-Gruppe, die einen Substituenten aufweisen kann, eine C₇₋₂₈-Aralkyl-Gruppe, die einen Substituenten aufweisen kann, eine C₁₋₁₀-Alkenyl-Gruppe, die einen Substituenten aufweisen kann oder eine C₁₋₁₀-Alkoxy-Gruppe, die einen Substituenten aufweisen kann, und R₈ repräsentiert -(CH₂)ₐ- (worin a eine ganze Zahl von 0 oder mindestens 1 repräsentiert); 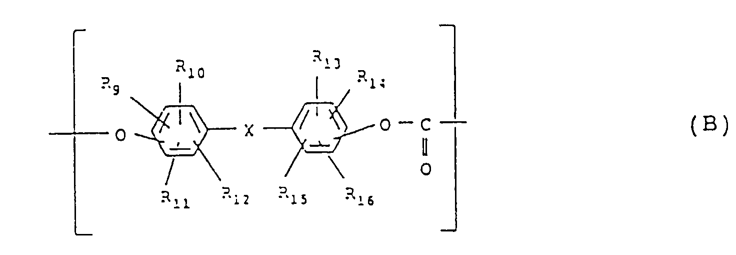 worin R₉ bis R₁₆ jeweils ein Wasserstoffatom, ein Halogenatom, eine C₁₋₅-Alkyl-Gruppe, die einen Substituenten aufweisen kann, eine C₆₋₁₂-Aryl-Gruppe, die einen Substituenten aufweisen kann, eine C₇₋₁₇-Aralkyl-Gruppe, die einen Substituenten aufweisen kann, eine C₂₋₅-Alkenyl-Gruppe, die einen Substituenten aufweisen kann oder eine C₁₋₅-Alkoxy-Gruppe, die einen Substituenten aufweisen kann, repräsentieren; X repräsentiert 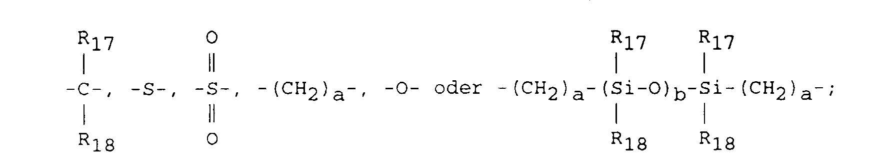 worin R₁₇ und R₁₈ jeweils ein Wasserstoffatom, ein Halogenatom, eine C₁₋₅-Alkyl-Gruppe, die einen Substituenten aufweisen kann oder eine C₆₋₁₂-Aryl-Gruppe, die einen Substituenten aufweisen kann, repräsentieren, oder R₁₇ und R₁₈ repräsentieren Gruppen, die miteinander einen carbocyclischen oder einen heterocyclischen Ring bilden, und a und b repräsentieren jeweils eine ganze Zahl von mindestens 1; 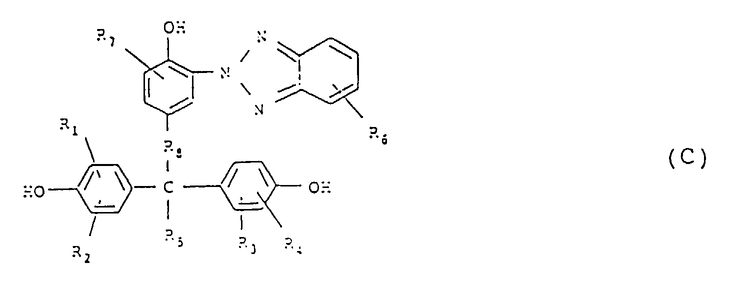 worin R₁ bis R₈ wie in der Formel (A) definiert sind; 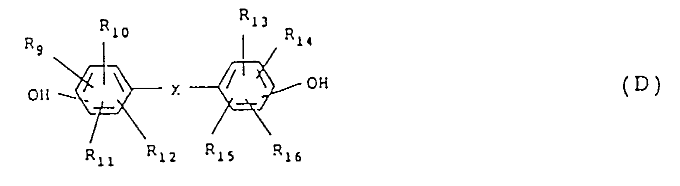 worin R₉ bis R₁₆ wie in Formel (B) definiert sind.

9. Verfahren zur Herstellung des Polycarbonats gemäß Anspruch 8, worin der Carbonat-Precursor Phosgen ist.

10. Verfahren zur Herstellung des Polycarbonats gemäß Anspruch 8, worin der Katalysator Pyridin, Natriumhydroxid oder Kaliumhydroxid ist.

11. Verfahren zur Herstellung des Polycarbonats gemäß Anspruch 8, worin die Reaktion in Gegenwart von mindestens einem Polymerisationskatalysator, ausgewählt aus tertiären Aminen und quaternären Ammoniumsalzen, durchgeführt wird.

12. Verfahren zur Herstellung des Polycarbonats gemäß Anspruch 8, worin mindestens ein Lösungsmittel verwendet wird, ausgewählt aus Methylenchlorid, Dichlormethan, 1,2-Dichlorethan, 1,1,2,2-Tetrachlorethan, Chloroform, 1,1,1-Trichlorethan, Tetrachlorkohlenstoff, Monochlorbenzol und Dichlorbenzol.

## Revendications

1. Polycarbonate comprenant un motif répétitif représenté par la formule (A) suivante ayant une structure benzotriazole et un motif répétitif représenté par la formule (B) suivante, dans lequel la proportion du motif répétitif représenté par la formule (A) est de 0,1 à 90 % en moles par rapport au nombre de moles du total des motifs répétitifs ; 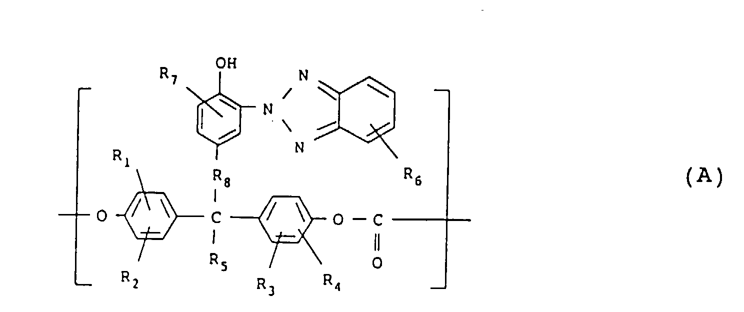 dans laquelle R₁ à R₆ représentent chacun un atome d'hydrogène, un atome d'halogène, un groupe alkyle en C₁ à C₅ éventuellement substitué, un groupe aryle en C₆ à C₁₂ éventuellement substitué, un groupe aralkyle en C₇ à C₁₇ éventuellement substitué, un groupe alcényle en C₂ à C₅ éventuellement substitué, ou un groupe alcoxy en C₁ à C₅ éventuellement substitué, R₇ représente un atome d'hydrogène, un groupe alkyle en C₁ à C₁₀ éventuellement substitué, un groupe aryle en C₆ à C₁₈ éventuellement substitué, un groupe aralkyle en C₇ à C₂₈ éventuellement substitué, un groupe alcényle en C₁ à C₁₀ éventuellement substitué ou un groupe alcoxy en C₁ à C₁₀ éventuellement substitué et R₈ représente -(CH₂)ₐ (où a représente un entier valant 0 ou au moins 1) ; 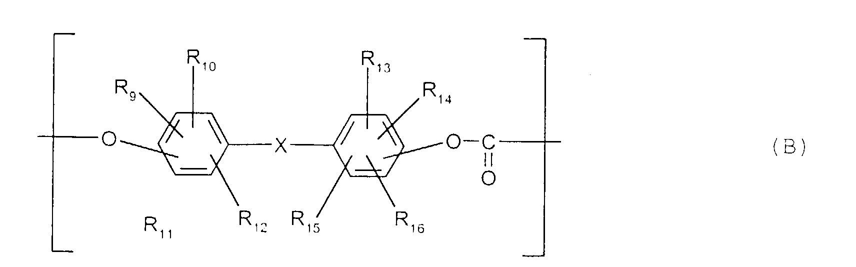 dans laquelle R₉ à R₁₆ représentent chacun un atome d'hydrogène, un atome d'halogène, un groupe alkyle en C₁ à C₅ éventuellement substitué, un groupe aryle en C₆ à C₁₂ éventuellement substitué, un groupe aralkyle en C₇ à C₁₇ éventuellement substitué, un groupe alcényle en C₂ à C₅ éventuellement substitué, ou un groupe alcoxy en C₁ à C₅ éventuellement substitué ; X représente 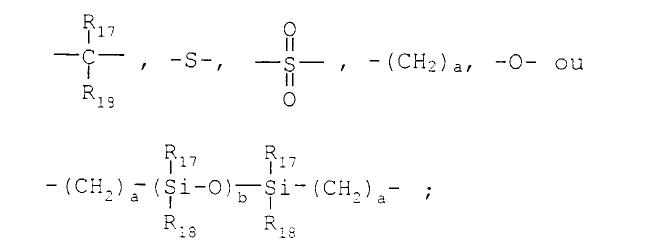 où R₁₇ et R₁₈ représentent chacun un atome d'hydrogène, un atome d'halogène, un groupe alkyle en C₁ à C₅ éventuellement substitué, ou un groupe aryle en C₆ à C₁₂ éventuellement substitué, ou bien R₁₇ et R₁₈ représentent des groupes qui, pris ensemble, forment un cycle carbocyclique ou un cycle hétérocyclique ; et a et b représentent chacun un entier valant au moins 1.

2. polycarbonate selon la revendication 1, dans lequel le motif répétitif représenté par la formule (A) dérivé d'un composé phénolique trivalent ayant une structure benzotriazole représenté par la formule (C) suivante : 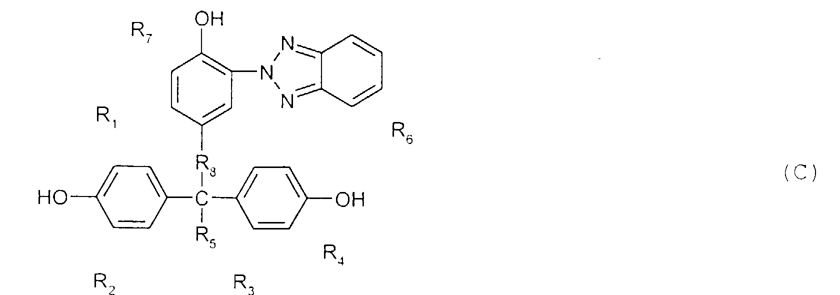 dans laquelle R₁ à R₈ ont les mêmes définitions que celles indiquées à propos de la formule (A).

3. Polycarbonate selon la revendication 1, dans lequel le composé phénolique trivalent ayant une structure benzotriazole représentée par la formule (C) est au moins un composé choisi dans l'ensemble constitué par les composés représentés par les formules suivantes :

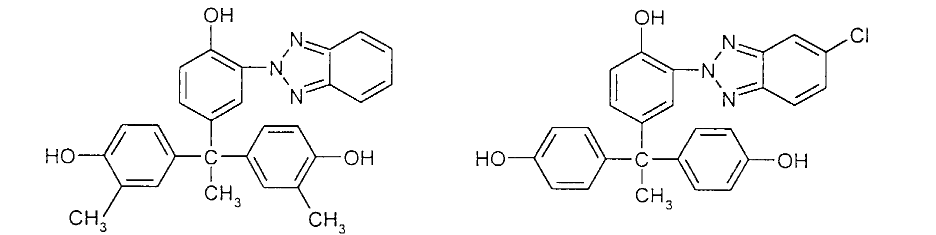

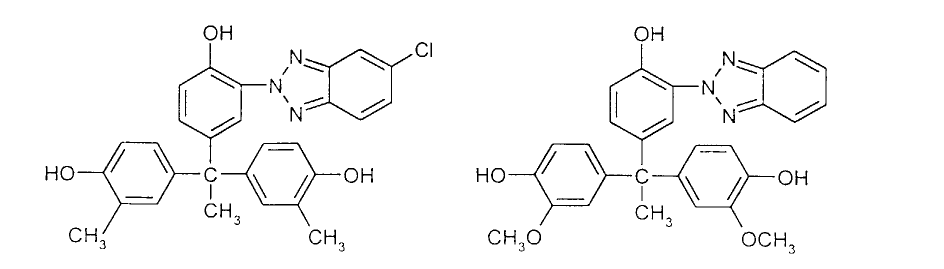

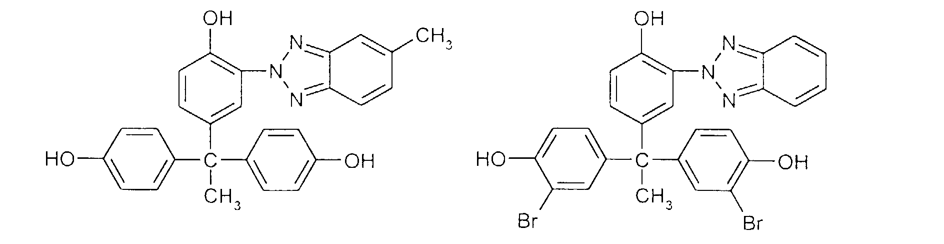

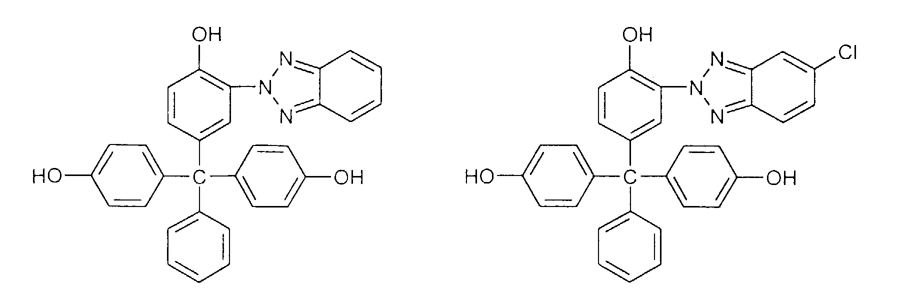

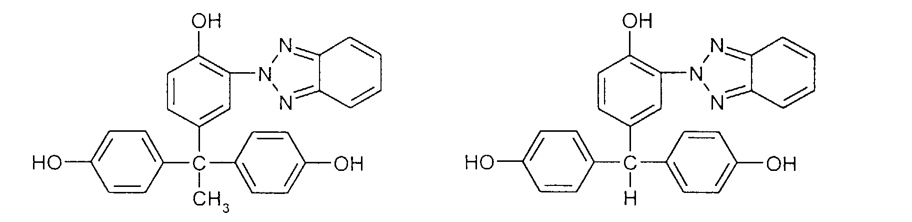

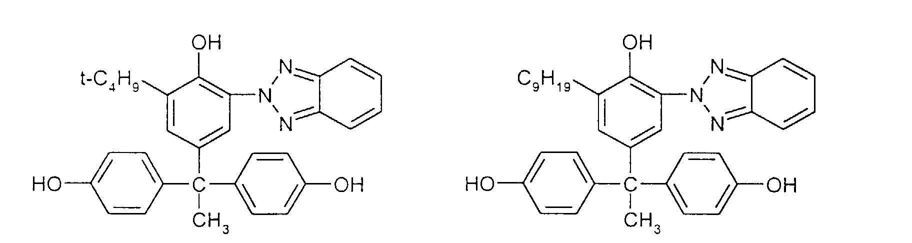

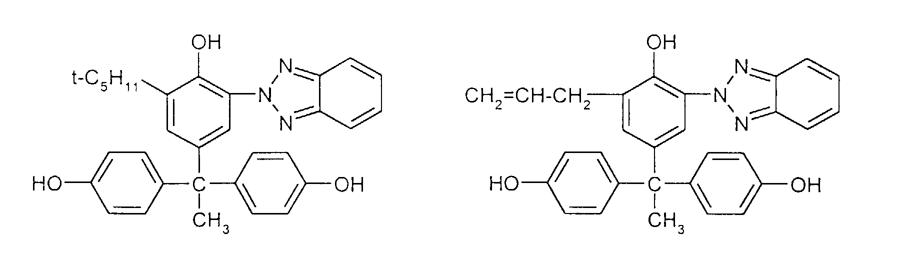

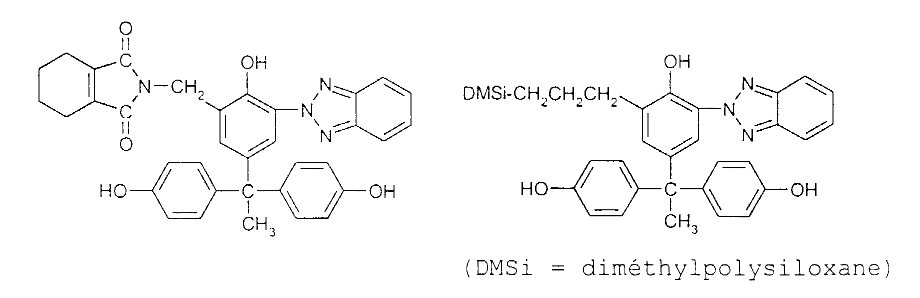

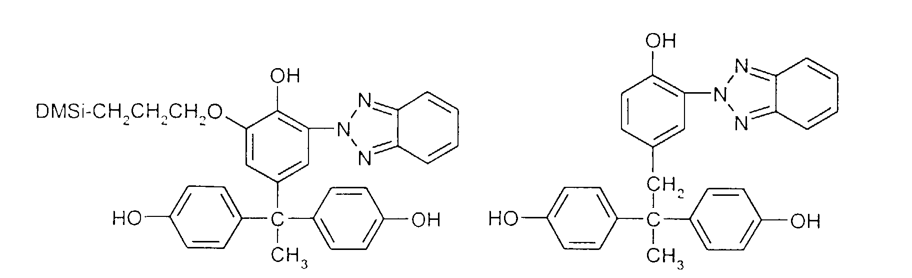

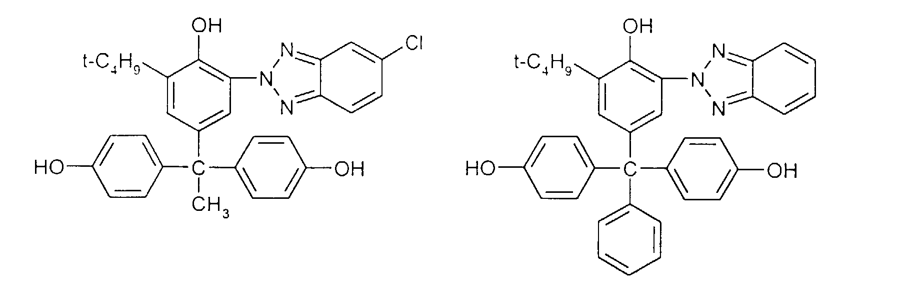

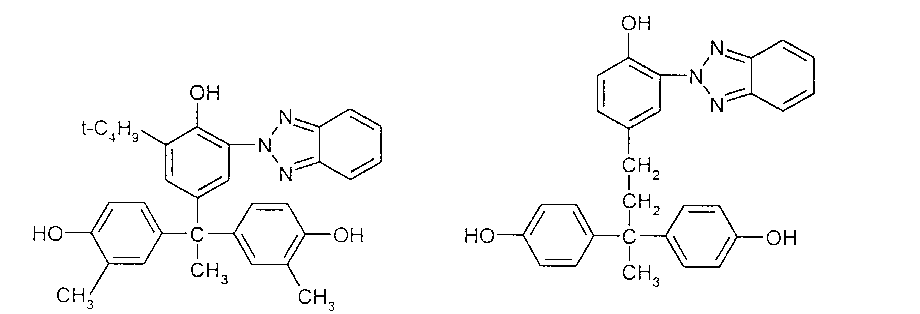

4. Polycarbonate selon la revendication 1, dans lequel le composé phénolique trivalent ayant une structure benzotriazole représentée par la formule (C) est au moins un composé choisi dans l'ensemble constitué par les composés représentés par les formules suivantes :

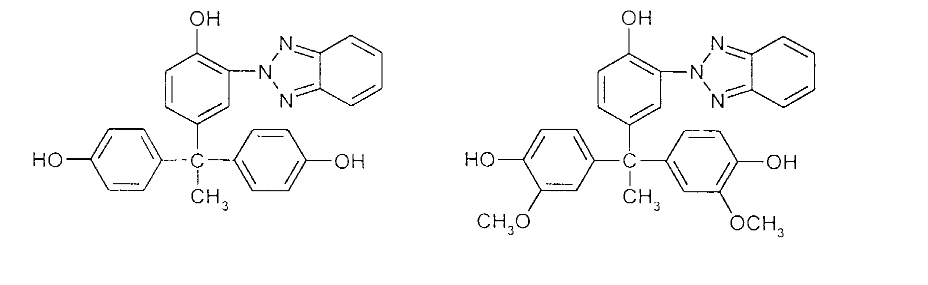

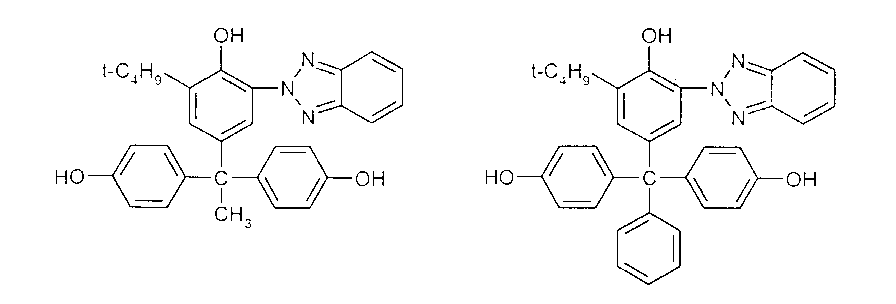

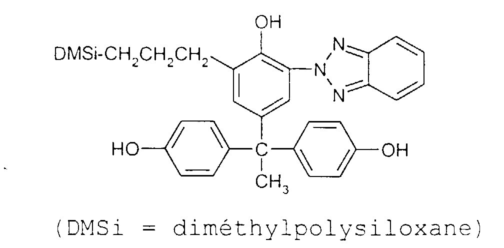

5. Polycarbonate selon la revendication 1, dans lequel le motif répétitif représenté par la formule (B) dérive d'un composé phénolique divalent représenté par la formule (D) suivante : 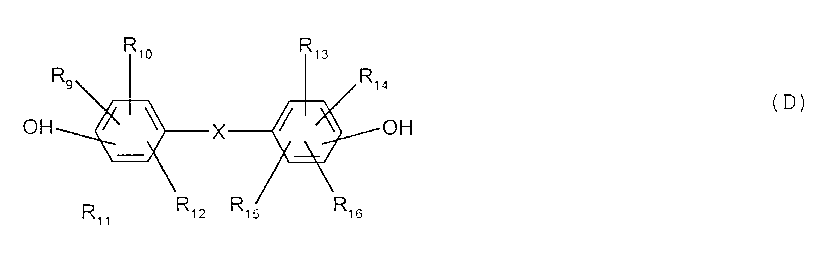 dans laquelle R₉ à R₁₆ ont les mêmes définitions que celles indiquées à propos de la formule (B).

6. Polycarbonate selon la revendication 1, dans lequel le composé phénolique divalent représenté par la formule (D) est au moins un composé choisis dans l'ensemble constitué par le bis(4-hydroxyphényl) méthane, le bis (4-hydroxyphényl)éther la bis(4-hydroxyphényl)-sulfone, le bis(4-hydroxyphényl)sulfite, le bis(4- hydroxyphényl)sulfoxyde, la bis(4-hydroxyphényl)cétone, le 1,1-bis(4-hydroxyphényl)éthane, le 2,2-bis(4-hydroxyphényl)propane, le 2,2-bis (4-hydroxyphényl)butane, le 1,1-bis(4-hydroxyphényl)cyclohexane, le 2,2-bis(4-hydroxy-3,5-dibromophényl)propane, le 2,2-bis(4-hydroxy-3,5-dichlorophényl)propane, le 2,2-bis (4-hydroxy-3-bromo-phényl)propane, le 2,2-bis(4-hydroxy-3-chlorophényl)-propane, le 2,2-bis[4-hydroxy-3-méthylphényl)propane, le 2,2-bis (4-hydroxy-3,3-diméthylphényl)propane, le 1,1-bis-(4-hydroxyphényl)-1-phényléthane, le bis(4-hydroxyphényl) diphénylméthane, et le α, ω-bis[3-(o-hydroxyphényl)- propyl]diméthylsiloxane.

7. Polycarbonate selon la revendication 1, dans lequel le composé phénolique divalent représenté par la formule (D) est au moins un composé choisi dans l'ensemble constitué par le 2,2-bis(4-hydroxy-phényl)propane, le 2,2-bis(4-hydroxyphényl) butane, le 1,1-bis(4-hydroxyphényl)cyclohexane, le 2,2-bis(4-hydroxy-3, 5-dibromophényl) propane, le 2,2-bis(4-hydroxy-3,5-dichlorophényl)propane, et le 1,1-bis(4-hydroxy-phényl)éthane.

8. Procédé pour produire un polycarbonate comprenant un motif répétitif représenté par la formule (A) suivante et un motif répétitif représenté par la formule (B) suivante, qui consiste à faire réagir un composé phénolique trivalent ayant une structure benzotriazole représenté par la formule (C) suivante et un composé phénolique divalent représenté par la formule (D) suivante avec un précurseur carbonate en présence d'un catalyseur et d'un solvant, et ensuite à polymériser le mélange réactionnel en présence d'un catalyseur de polymérisation, 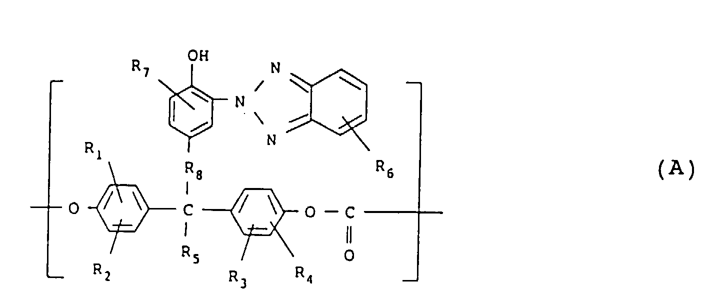 dans laquelle R₁ à R₆ représentent chacun un atome d'hydrogène, un atome d'halogène, un groupe alkyle en C₁ à C₅ éventuellement substitué, un groupe aryle en C₆ à C₁₂ éventuellement substitué, un groupe aralkyle en C₇ à C₁₇ éventuellement substitué, un groupe alcényle en C₂ à C₅ éventuellement substitué, ou un groupe alcoxy en C₁ à C₅ éventuellement substitué, R₇ représente un atome d'hydrogène, un groupe alkyle en C₁ à C₁₀ éventuellement substitué, un groupe aryle en C₆ à C₁₈ éventuellement substitué, un groupe aralKyle en C₇ à C₂₈ éventuellement substitué, un groupe alcényle en C₁ à C₁₀éventuellement substitué, ou un groupe alcoxy en C₁ à C₁₀ éventuellement substitué, et R₈ représente -(CH₂)ₐ (où a représente un entier valant 0 ou au moins 1) ; 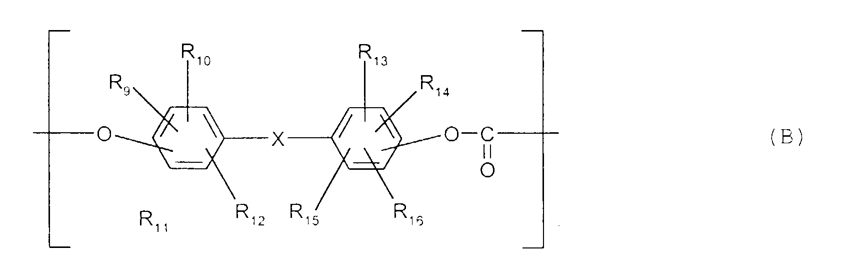 dans laquelle R₉ à R₁₆ représentent chacun un atome d'hydrogène, un groupe halogène, un groupe alkyle en C₁ à C₅ éventuellement substitué, un groupe aryle en C₆ à C₁₂ éventuellement substitué, un groupe aralkyle en C₇ à C₁₇ éventuellement substitué, un groupe alcényle en C₂ à C₅ éventuellement substitué, ou un groupe alcoxy en C₁ à C₅ éventuellement substitué ; X représenté 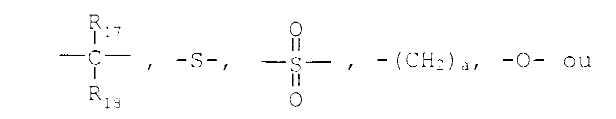 où R₁₇ et R₁₈ représentent chacun un atome d'hydrogène, un atome d'halogène, un groupe alkyle en C₁ à C₅ éventuellement substitué, ou un groupe aryle en C₆ à C₁₂ éventuellement substitué, ou bien R₁₇ et R₁₈ représentent des groupes qui, pris ensemble, forment un cycle carbocyclique ou un cycle hétérocyclique ; et a et b représentent chacun un entier valant au moins 1 ; 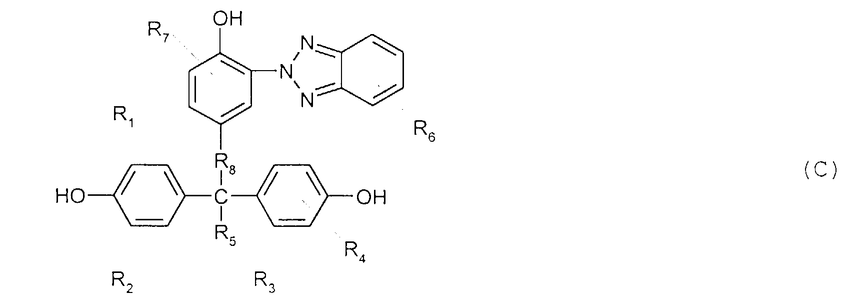 dans laquelle R₁ à R₈ ont les mêmes définitions que celles indiquées à propos de la formule (A) ; 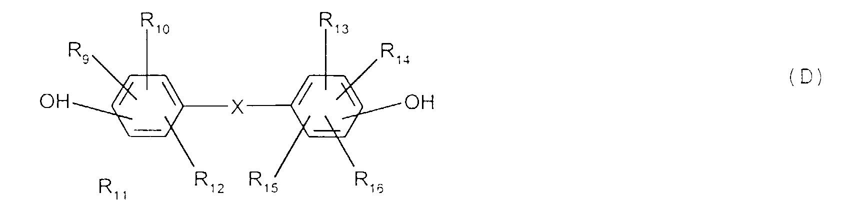 dans laquelle R₉ à R₁₆ ont les mêmes définitions que celles indiquées à propos de la formule (B).

9. Procédé pour produire le polycarbonate selon la revendication 8, dans lequel le précurseur carbonate est du phosgène.

10. Procédé pour produire le polycarbonate selon la revendication 8, dans lequel le catalyseur est de la pyridine, de l'hydroxyde de sodium ou de l'hydroxyde de potassium.

11. Procédé pour produire le polycarbonate selon la revendication 8, dans lequel la réaction se déroule en présence d'au moins un catalyseur de polymérisation choisi parmi les amines tertiaires et les sels d'ammonium quaternaire.

12. Procédé pour produire le polycarbonate selon la revendication 8, dans lequel on utilise au moins un solvant choisi dans l'ensemble constitué par le chlorure de méthylène, le dichlorométhane, le 1,2-dichloroéthane, le 1,1,2,2-tétrachloroéthane, le chloroforme, le 1,1,1-trichloroéthane, le tétrachlorométhane, le monochloro-benzène et le dichlorobenzène.
